# EUROPEAN PATENT APPLICATION

(11) **EP 4 642 063 A1**
(43) Date of publication of application: **29.10.2025**
(21) Application number: 23923807.4
(22) Date of filing: 28.11.2023
(51) Int. Cl.: H04W 4/80

(54) **BLUETOOTH THIRD-PARTY APPLICATION CALL MANAGEMENT METHOD, ELECTRONIC DEVICES, AND SYSTEM**

(30) Priority: 25.02.2023 CN 202310216092
(71) Applicant: Honor Device Co., Ltd., Shenzhen, Guangdong 518040 (CN)
(72) Inventor: SUO, Yayun, Shenzhen, Guangdong 518040 (CN)
(74) Representative: Isarpatent
(86) International application number: PCT/CN2023/134767
(87) International publication number: WO 2024/174644

(57) **Abstract**

This application discloses a Bluetooth third-party application call management method, an electronic device, and a system, and relates to the field of terminals. The method includes the following steps: when an electronic device learns about that a third-party application has a call task to be processed, the electronic device sends call scenario information to a wearable device based on a Bluetooth connection through a first application, so that the wearable device can acquire a current call scenario; and when the wearable device receives a first operation acting on the wearable device, the wearable device sends a first command corresponding to the first operation to the first application in the electronic device through the Bluetooth connection, so that the first application executes a first function corresponding to the first command (such as answering an incoming call, hanging up a call, or rejecting an incoming call).

## Description

This application claims priority to Chinese Patent Application No. 202310216092.6, filed with the China National Intellectual Property Administration on February 25, 2023 and entitled "BLUETOOTH THIRD-PARTY APPLICATION CALL MANAGEMENT METHOD, ELECTRONIC DEVICES, AND SYSTEM", which is incorporated herein by reference in its entirety.

### TECHNICAL FIELD

This application relates to the field of terminals, and in particular to a Bluetooth third-party application call management method, an electronic device, and a system.

### BACKGROUND

With the development of terminal technology, wearable devices are increasingly widely used in users' daily lives. Wearable devices can establish Bluetooth communication connections with electronic devices during calls. Users can operate on wearable devices to manage call tasks based on electronic devices through Bluetooth communication connections. For example, users can touch wearable devices to answer/hang up calls based on electronic devices.

However, the above call management method based on wearable devices can currently only be applied to system call tasks of electronic devices. In non-system call tasks, such as call tasks conducted through third-party applications in electronic devices, users cannot manage the call tasks based on wearable devices. Therefore, users need to manage the call tasks based on electronic devices, which makes the operation extremely cumbersome and makes it difficult for users to efficiently manage the call tasks.

### SUMMARY

This application provides a Bluetooth third-party application call management method, an electronic device, and a system, which implements the Bluetooth third-party application call management method. Therefore, a user can more conveniently manage a call task initiated by a third-party application, the operation is simple, and the efficiency is higher.

According to a first aspect, this application provides a Bluetooth third-party application call management method applied to a first electronic device. The method includes: establishing, by the first electronic device, a Bluetooth communication connection with a second electronic device; receiving, by a first application in the first electronic device, a call request; and sending, by the first electronic device, call scenario information to the second electronic device, where the first application is a third-party application that supports instant messaging, and the call scenario information is used for indicating an incoming call scenario or an outgoing call scenario. In this way, the Bluetooth third-party application call management method is implemented. Therefore, a user can more conveniently manage a call task initiated by the third-party application, the operation is simple, and the efficiency is higher.

In a possible implementation, the method further includes: receiving, by the first electronic device, a first command sent by the second electronic device, where the first command indicates a first function; and performing, by the first electronic device, the first function through the first application based on the first command, where the first function is an incoming call answering function, an incoming call rejection function, or a call hanging-up function.

In a possible implementation, after receiving, by a first application in the first electronic device, a call request, the method further includes: sending, by the first electronic device, contact information to the second electronic device, where the contact information includes a contact name and/or an identifier of the first application, where the contact name is a name of a contact displayed in the first application.

In a possible implementation, after sending, by the first electronic device, call scenario information to the second electronic device, the method further includes: establishing, by the first electronic device, a Bluetooth audio channel with the second electronic device; synthesizing, by the first electronic device, first audio based on the incoming call prompt tone and the acquired contact information; and sending, by the first electronic device, the first audio to the second electronic device based on the Bluetooth audio channel, where the content of the first audio includes the incoming call prompt tone, the contact name, and/or a name of the first application, so that the second electronic device plays the first audio to a user. In this way, it can prompt the user about a new incoming call and prompt the user about the contact related information, thus facilitating the operation by the user and making the call more convenient.

In a possible implementation, after sending, by the first electronic device, call scenario information to the second electronic device, the method further includes: establishing, by the first electronic device, a Bluetooth audio channel with the second electronic device; and sending, by the first electronic device, an incoming call prompt tone to the second electronic device based on the Bluetooth audio channel, where the incoming call prompt tone is used by the second electronic device for prompting a user about a new incoming call. In this way, it can prompt the user about the new incoming call, thus facilitating the operation by the user and making the call more convenient.

In a possible implementation, after sending, by the first electronic device, call scenario information to the second electronic device, the method further includes: establishing, by the first electronic device, a Bluetooth audio channel with the second electronic device; synthesizing, by the first electronic device, third audio based on the acquired contact information; and sending, by the first electronic device, the third audio to the second electronic device based on the Bluetooth audio channel, where the content of the third audio includes a contact name and/or a name of the first application, so that the second electronic device plays the third audio to a user. In this way, it can prompt the user about the contact information, thus facilitating the operation by the user and making the call more convenient.

In a possible implementation, the call scenario information includes an identifier of a call scenario.

In a possible implementation, the call scenario information is sent within an AT command.

In a possible implementation, AT+CIEV: (callsetup=1) is used for indicating that a current call scenario is an incoming call scenario, and AT+CIEV: (callsetup=2) is used for indicating that the current call scenario is an outgoing call scenario.

In a possible implementation, the first command is an AT command.

In a possible implementation, AT+ATA is used for representing the incoming call answering function, and AT+CHUP is used for representing the incoming call rejection function or the call hanging-up function.

In a possible implementation, the contact information is sent within an AT command.

In a possible implementation, the AT command includes an AT+CLCC command, a number field in the AT+CLCC command represents the contact name, and a contact name field in the AT+CLCC command represents the identifier of the first application; or, the contact name field in the AT+CLCC command represents the contact name, and the number field in the AT+CLCC command represents the identifier of the first application; or, the number field in the AT+CLCC command represents the contact name and the identifier of the first application; or, the contact name field in the AT+CLCC command represents the contact name and the identifier of the first application. In this way, the electronic device 100 can send the contact information more efficiently.

According to a second aspect, this application provides a Bluetooth third-party application call management method applied to a second electronic device. The method includes: establishing, by the second electronic device, a Bluetooth communication connection with a first electronic device; receiving, by the second electronic device, call scenario information sent by the first electronic device; and playing, by the second electronic device, a contact name and/or a name of a first application, where the first application is a third-party application that supports instant messaging, the call scenario information is used for indicating an incoming call scenario or an outgoing call scenario, and the contact name is a name of a contact displayed in the first application. In this way, a user can more conveniently manage a call task initiated by the third-party application, the operation is simple, and the efficiency is higher.

In a possible implementation, after receiving, by the second electronic device, call scenario information sent by the first electronic device, the method further includes: receiving, by the second electronic device, a first operation; and sending, by the second electronic device, a first command corresponding to the first operation to the first electronic device, where the first command indicates a first function, and the first function is an incoming call answering function, an incoming call rejection function, or a call hanging-up function.

In a possible implementation, after establishing, by the second electronic device, a Bluetooth communication connection with a first electronic device, the method further includes: receiving, by the second electronic device, contact information sent by the first electronic device, where the contact information includes a contact name and/or an identifier of the first application.

In a possible implementation, playing, by the second electronic device, a contact name and/or a name of a first application specifically includes: receiving, by the second electronic device, first audio sent by the first electronic device; and playing, by the second electronic device, an incoming call prompt tone, the contact name and/or the name of the first application based on the first audio. In this way, it can prompt the user about a new incoming call and prompt the user about the contact related information, thus facilitating the operation by the user and making the call more convenient.

In a possible implementation, playing, by the second electronic device, a contact name and/or a name of a first application specifically includes: synthesizing, by the second electronic device, second audio based on acquired contact information; and playing, by the second electronic device, the contact name and/or the name of the first application based on the second audio.

In a possible implementation, before synthesizing, by the second electronic device, second audio based on acquired contact information, the method further includes: receiving, by the second electronic device, an incoming call prompt tone sent by the first electronic device; and before playing, by the second electronic device, the contact name and/or the name of the first application based on the second audio, the method further includes: playing, by the second electronic device, the incoming call prompt tone.

In a possible implementation, the first operation is an operation of tapping an earphone once, an operation of long-pressing the earphone, or an operation of tapping the earphone twice.

In a possible implementation, the first command is an incoming call answering command, an incoming call rejection command, or a call hanging-up command.

In a possible implementation, the first command is an AT command.

In a possible implementation, AT+ATA is used for representing the incoming call answering function, and AT+CHUP is used for representing the incoming call rejection function, the call hanging-up function, or a call cancellation function.

According to a third aspect, this application provides a Bluetooth third-party application call management method applied to a second electronic device. The method includes: establishing, by the second electronic device, a Bluetooth communication connection with a first electronic device; receiving, by the second electronic device, call state information and contact information sent by the first electronic device; and displaying, by the second electronic device, a call management control corresponding to the call scenario information, a contact name, and/or a name of the first application, where the first application is a third-party application that supports instant messaging, the call state information includes call scenario information and contact information, the call scenario information is used for indicating an incoming call scenario or an outgoing call scenario, and the contact information includes the contact name and/or an identifier of the first application, where the contact name is a name of a contact displayed in the first application. In this way, a user can more conveniently manage a call task initiated by the third-party application, the operation is simple, and the efficiency is higher.

In a possible implementation, after receiving, by the second electronic device, call scenario information and contact information sent by the first electronic device, the method further includes: receiving, by the second electronic device, a first operation; and sending, by the second electronic device, a first command corresponding to the first operation to the first electronic device, where the first command indicates a first function, and the first function is an incoming call answering function, an incoming call rejection function, a call cancellation function, or a call hanging-up function.

In a possible implementation, the call management control includes an incoming call answering control, and/or an incoming call cancellation control, and/or an incoming call rejection control, and/or a call hanging-up control.

In a possible implementation, the first operation is a touch operation acting on the incoming call answering control, a touch operation acting on the incoming call rejection control, a touch operation acting on the incoming call cancellation control, or a touch operation acting on the call hanging-up control.

In a possible implementation, the first command is an incoming call answering command, an incoming call rejection command, a call cancellation command, or a call hanging-up command.

In a possible implementation, the first command is an AT command.

In a possible implementation, AT+ATA is used for representing the incoming call answering function, and AT+CHUP is used for representing the incoming call rejection function, the call hanging-up function, or the call cancellation function.

In a possible implementation, the method further includes: receiving, by the second electronic device, first audio sent by the first electronic device; and playing, by the second electronic device, an incoming call prompt tone, the contact name and/or the name of the first application based on the first audio.

In a possible implementation, the method further includes: synthesizing, by the second electronic device, second audio based on the contact information; and playing, by the second electronic device, the contact name and/or the name of the first application based on the second audio.

In a possible implementation, the method further includes: receiving, by the second electronic device, an incoming call prompt tone sent by the first electronic device; and playing, by the second electronic device, the incoming call prompt tone.

In a possible implementation, before playing, by the second electronic device, the incoming call prompt tone, the method further includes: synthesizing, by the second electronic device, second audio based on the contact information; and after playing, by the second electronic device, the incoming call prompt tone, the method further includes: playing, by the second electronic device, the contact name and/or the name of the first application based on the second audio.

According to a fourth aspect, this application provides a Bluetooth third-party application call management method applied to a communication system including a first electronic device and a second electronic device. The method includes: establishing, by the first electronic device, a Bluetooth communication connection with the second electronic device; receiving, by a first application in the first electronic device, a call request; sending, by the first electronic device, call scenario information to the second electronic device; and playing, by the second electronic device, an incoming call prompt tone, and/or a contact name, and/or a name of the first application, where the first application is a third-party application that supports instant messaging, the call state information includes call scenario information, and the call scenario information is used for indicating an incoming call scenario or an outgoing call scenario. In this way, a user can more conveniently manage a call task initiated by the third-party application, the operation is simple, and the efficiency is higher.

In a possible implementation, the method further includes: receiving, by the second electronic device, a first operation; sending, by the second electronic device, a first command corresponding to the first operation to the first electronic device, where the first command indicates a first function, and the first function is an incoming call answering function, an incoming call rejection function, or a call hanging-up function; and performing, by the first electronic device, the first function through the first application based on the first command.

In a possible implementation, after receiving, by a first application in the first electronic device, a call request, the method further includes: sending, by the first electronic device, contact information to the second electronic device, where the contact information includes the contact name and/or an identifier of the first application, where the contact name is a name of a contact displayed in the first application.

In a possible implementation, after sending, by the first electronic device, call scenario information to the second electronic device, the method further includes: establishing, by the first electronic device, a Bluetooth audio channel with the second electronic device; synthesizing, by the first electronic device, first audio based on the incoming call prompt tone and the acquired contact information; sending, by the first electronic device, the first audio to the second electronic device based on the Bluetooth audio channel; and playing, by the second electronic device, the incoming call prompt tone, and/or the contact name, and/or the name of the first application, specifically including: playing, by the second electronic device, the incoming call prompt tone, the contact name and/or the name of the first application based on the first audio.

In a possible implementation, playing, by the second electronic device, the incoming call prompt tone, and/or the contact name, and the name of the first application specifically includes: synthesizing, by the second electronic device, second audio based on the contact information; and playing, by the second electronic device, the contact name and/or the name of the first application based on the second audio.

In a possible implementation, after sending, by the first electronic device, call scenario information to the second electronic device, the method further includes: establishing, by the first electronic device, a Bluetooth audio channel with the second electronic device; synthesizing, by the first electronic device, third audio based on the acquired contact information; and playing, by the second electronic device, the incoming call prompt tone, and/or the contact name, and the name of the first application, specifically including: playing, by the second electronic device, the contact name and/or the name of the first application based on the third audio.

In a possible implementation, the call scenario information is sent within an AT command.

In a possible implementation, AT+CIEV: (callsetup=1) is used for indicating that a current call scenario is an incoming call scenario, and AT+CIEV: (callsetup=2) is used for indicating that the current call scenario is an outgoing call scenario.

In a possible implementation, the first operation is an operation of tapping an earphone once, an operation of long-pressing the earphone, or an operation of tapping the earphone twice; the first command is an AT command.

In a possible implementation, AT+ATA is used for representing the incoming call answering function, and AT+CHUP is used for representing the incoming call rejection function or the call hanging-up function.

In a possible implementation, the contact information is sent within an AT command.

In a possible implementation, the AT command includes an AT+CLCC command, a number field in the AT+CLCC command represents the contact name, and a contact name field in the AT+CLCC command represents the identifier of the first application; or, the contact name field in the AT+CLCC command represents the contact name, and the number field in the AT+CLCC command represents the identifier of the first application; or, the number field in the AT+CLCC command represents the contact name and the identifier of the first application; or, the contact name field in the AT+CLCC command represents the contact name and the identifier of the first application.

According to a fifth aspect, this application provides a Bluetooth third-party application call management method applied to a communication system including a first electronic device and a second electronic device. The method includes: establishing, by the first electronic device, a Bluetooth communication connection with the second electronic device; receiving, by a first application in the first electronic device, a call request; sending, by the first electronic device, call scenario information and contact information to the second electronic device; and displaying, by the second electronic device, a call management control corresponding to the call scenario information, a contact name, and/or a name of the first application, where the first application is a third-party application that supports instant messaging, the call scenario information is used for indicating an incoming call scenario or an outgoing call scenario, the contact information includes the contact name and/or an identifier of the first application, and the contact name is a name of a contact displayed in the first application. In this way, a user can more conveniently manage a call task initiated by the third-party application, the operation is simple, and the efficiency is higher.

In a possible implementation, after displaying, by the second electronic device, a call management control corresponding to the call scenario information, a contact name, and/or a name of the first application, the method further includes: receiving, by the second electronic device, a first operation; sending, by the second electronic device, a first command corresponding to the first operation to the first electronic device, where the first command indicates a first function, and the first function is an incoming call answering function, an incoming call rejection function, a call cancellation function, or a call hanging-up function; and performing, by the first electronic device, the first function through the first application based on the first command.

In a possible implementation, the call management control includes an incoming call answering control, and/or an incoming call cancellation control, and/or an incoming call rejection control, and/or a call hanging-up control.

In a possible implementation, the first operation is a touch operation acting on the incoming call answering control, a touch operation acting on the incoming call rejection control, a touch operation acting on the incoming call cancellation control, or a touch operation acting on the call hanging-up control.

In a possible implementation, the first command is an incoming call answering command, an incoming call rejection command, a call cancellation command, or a call hanging-up command.

In a possible implementation, the first command is an AT command.

In a possible implementation, AT+ATA is used for representing the incoming call answering function, and AT+CHUP is used for representing the incoming call rejection function, the call hanging-up function, or the call cancellation function.

In a possible implementation, the method further includes: further receiving, by the second electronic device, first audio sent by the first electronic device; and playing, by the second electronic device, an incoming call prompt tone, the contact name and/or the name of the first application based on the first audio.

In a possible implementation, the first command is an incoming call answering command, an incoming call rejection command, a call cancellation command, or a call hanging-up command.

In a possible implementation, the first command is an AT command.

In a possible implementation, AT+ATA is used for representing the incoming call answering function, and AT+CHUP is used for representing the incoming call rejection function, the call hanging-up function, or a call cancellation function.

In a possible implementation, the method further includes: further receiving, by the second electronic device, first audio sent by the first electronic device; and playing, by the second electronic device, an incoming call prompt tone, the contact name and/or the name of the first application based on the first audio.

In a possible implementation, the method further includes: synthesizing, by the second electronic device, second audio based on the contact information; and playing, by the second electronic device, the contact name and/or the name of the first application based on the second audio.

In a possible implementation, the method further includes: receiving, by the second electronic device, an incoming call prompt tone sent by the first electronic device; and playing, by the second electronic device, the incoming call prompt tone.

According to a sixth aspect, an embodiment of this application provides a computer-readable storage medium, including computer instructions. The computer instructions, when running on an electronic device, cause the electronic device to perform the method according to any one of the possible implementations of any one of the foregoing aspects. In this way, a user can more conveniently manage a call task initiated by the third-party application, the operation is simple, and the efficiency is higher.

According to a sixth aspect, an embodiment of this application provides a chip system, including a processing circuit and an interface circuit. The interface circuit is configured to receive code instructions and transmit the code instructions to the processing circuit. The processing circuit is configured to run the code instructions to perform the method according to any one of the possible implementations of any one of the foregoing aspects. In this way, a user can more conveniently manage a call task initiated by the third-party application, the operation is simple, and the efficiency is higher.

### BRIEF DESCRIPTION OF DRAWINGS

FIG. 1A is a schematic diagram of an architecture of a communication system 10 according to an embodiment of this application;
FIG. 1B is a schematic diagram of a software architecture of a communication system 10 according to an embodiment of this application;
FIG. 1C is a schematic diagram of interaction between modules in a Bluetooth third-party application call management method according to an embodiment of this application;
FIG. 1D is a specific flowchart of a Bluetooth third-party application call management method according to an embodiment of this application;
FIG. 2A is a schematic diagram of an architecture of a communication system 20 according to an embodiment of this application;
FIG. 2B is a schematic diagram of a software architecture of a communication system 20 according to an embodiment of this application;
FIG. 2C is a schematic diagram of interaction between modules in another Bluetooth third-party application call management method according to an embodiment of this application;
FIG. 3A to FIG. 3C are schematic diagrams of a group of user interfaces according to an embodiment of this application;
FIG. 4 is a specific flowchart of another Bluetooth third-party application call management method according to an embodiment of this application;
FIG. 5 is a schematic diagram of a hardware structure of an electronic device 100 according to an embodiment of this application; and
FIG. 6 is a schematic diagram of a hardware structure of an electronic device 200 according to an embodiment of this application.

### DESCRIPTION OF EMBODIMENTS

Terms used in the following embodiments of this application are merely intended to describe specific embodiments, but not intended to limit this application. As used in this specification and the claims of this application, singular expressions "a", "an", "the", "the foregoing", and "this" are also intended to include plural expressions, unless otherwise expressly specified in the context. It should be further understood that the term "and/or" used in this application means including any or all possible combinations of one or more of listed items. In embodiments of this application, the terms "first" and "second" are merely intended for a purpose of description, and shall not be understood as implying relative importance or implicitly indicating a quantity of indicated technical features. Therefore, features defined with "first" and "second" may explicitly or implicitly include one or more features. In the descriptions of the embodiments of this application, unless otherwise stated, "multiple" means two or more.

**First, an embodiment of this application provides a Bluetooth third-party application call management method.**

The Bluetooth third-party application call management method may be applied to a communication system consisting of a wearable device (also referred to as an electronic device 200) and an electronic device (also referred to as an electronic device 100). The third-party application refers to an application that may be used for supporting instant messaging. The instant messaging is non-system call triggered instant messaging. It is to be understood that a system call is a call based on a subscriber identity module (SIM).

In some embodiments, the third-party applications may perform a Voice over Internet Protocol (VoIP) call. The VoIP call refers to a voice call technology, which achieves voice calls and multimedia conferences via IP protocols, that is, communication via the Internet. Other informal names include IP call, Internet call, broadband call, and broadband call service. That is to say, the VoIP technology is a technology that converts voice into IP data packets and transmits them partially or entirely based on IP networks. In some other embodiments, the third-party application may also make calls based on other voice sending technologies, which is not limited in this application. Subsequent embodiments will be described by taking the VoIP call as an example.

Specifically, when an electronic device learns about that a third-party application (also referred to as a first application, such as WeChat^{®} or QQ^{®}) has a call task to be processed, the electronic device may send call scenario information to a wearable device based on a Bluetooth connection (i.e., Bluetooth communication connection) through the first application, so that the wearable device can determine a current call scenario. When the wearable device receives a first operation acting on the wearable device (such as clicking, double clicking, or long pressing, or a touch operation acting on a display interface of the wearable device), the wearable device may send a first command corresponding to the first operation to the first application in the electronic device through the Bluetooth connection, so that the first application can execute a first function corresponding to the first command (such as answering an incoming call, hanging up a call, or rejecting an incoming call). A specific implementation will be described in detail in subsequent embodiments.

The electronic device may be a mobile phone, a tablet computer, a PC, an ultra-mobile personal computer (UMPC), a netbook, a personal digital assistant (PDA), or the like. The specific type of the electronic device is not limited in any manner in this embodiment of this application. The wearable device may be an electronic device such as smart watch, a smart bracelet, or an earphone. The wearable device supports Hands-Free Profile (HFP). The specific type of the wearable device is not limited in any manner in this application.

From the method, it can be seen that, by implementing the Bluetooth third-party application call management method provided in this application, a user can more conveniently manage a call task initiated by the third-party application, the operation is simple, and the efficiency is higher.

**Below, a communication system 10 according to an embodiment of this application will be described.**

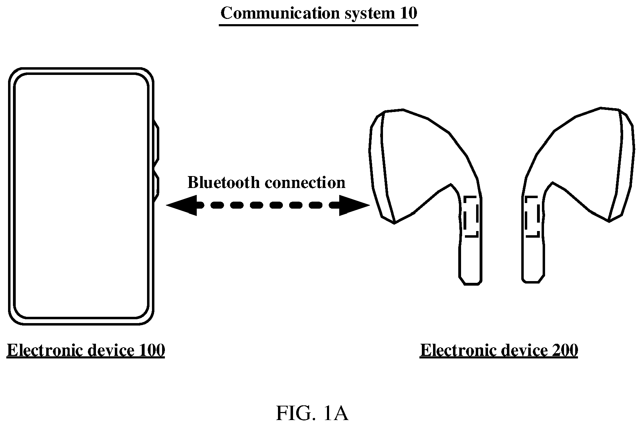

Refer to FIG. 1A. FIG. 1A shows a schematic diagram of an architecture of a communication system 10 according to an embodiment of this application.

As shown in FIG. 1A, description is made here by taking an electronic device 100 being a mobile phone and an electronic device 200 being an earphone as an example. The electronic device 100 and the electronic device 200 may establish a Bluetooth connection, and transmit data information to each other through the Bluetooth connection. For example, the electronic device 100 may send call scenario information (such as incoming call scenario information or outgoing call scenario information) to electronic device 200 through the Bluetooth connection. When the electronic device 200 receives a first operation acting thereon (such as clicking, double clicking, or long pressing), the electronic device 200 may send a first command corresponding to the first operation (such as an incoming call answering command, an incoming call rejection command, or a call hanging-up command) to the electronic device 100 through the Bluetooth connection, so that the electronic device 100 can perform a first function corresponding to the first command (such as answering an incoming call, rejecting an incoming call, or hanging up a call).

In some embodiments, the electronic device 100 may be an electronic device such as a mobile phone, a tablet computer, a PC, an ultra-mobile personal computer (UMPC), a netbook, or a personal digital assistant (PDA). The specific type of the electronic device 100 is not limited in any manner in this application. The electronic device 200 may be an electronic device such as a smart watch, a smart bracelet, a wearable device, an augmented reality (AR)/a virtual reality (VR) device, or the like. The specific type of the electronic device 200 is not limited in any manner in this application.

It is to be understood that the exemplary structure of the communication system shown in this embodiment of this application does not constitute a specific limitation on the communication system 10. In some other embodiments of this application, the communication system 10 may include more or less electronic devices than the electronic devices shown in the figure, or may include electronic devices whose type is different from the type of the electronic devices shown in the figure. For example, the communication system 10 may further include multiple electronic devices 200 that establish communication connections with the electronic device 100, such as smart watches, or multiple different types of electronic devices, such as displays, tablet computers, and PCs that have a communication function. This is not limited in this application.

**Below, a software architecture of a communication system 10 according to an embodiment of this application will be described.**

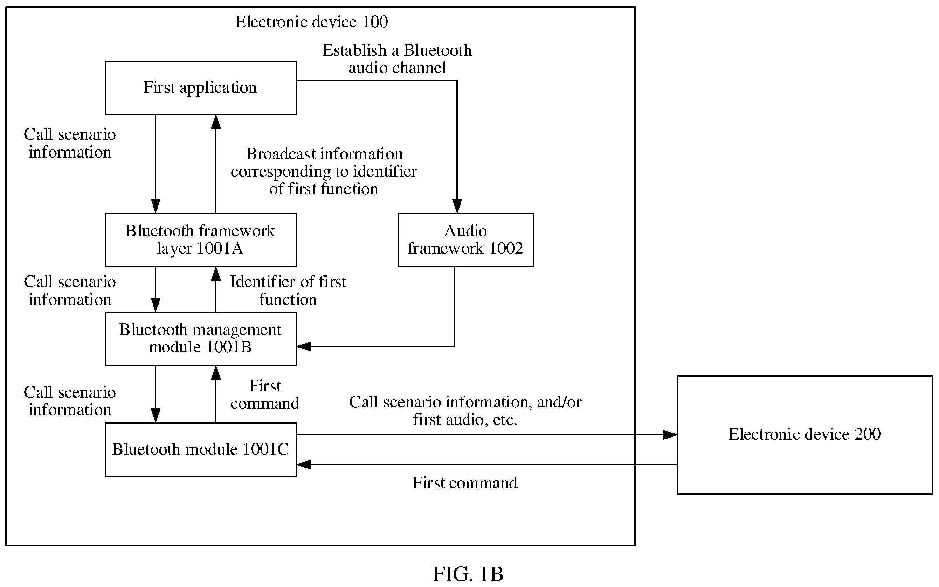

Refer to FIG. 1B. FIG. 1B shows a schematic diagram of a software architecture of a communication system 10 according to an embodiment of this application.

As shown in FIG. 1B, the communication system 10 includes an electronic device 100 and an electronic device 200. The electronic device 100 may include a first application, a Bluetooth framework layer (Bluetooth framework, i.e., Bluetooth FWK) 1001A, a Bluetooth management module (Bluetooth Android application package, i.e., Bluetooth APK) 1001B, a Bluetooth module (Bluetooth chip, BTC) 1001C, and an audio framework 1002.

The first application may send call scenario information to the electronic device 200 through the Bluetooth framework layer 1001A, the Bluetooth management module 1001B, and the Bluetooth module 1001C, so as to notify the electronic device 200 of a current call scenario.

In a possible implementation, the first application may also send contact information (such as a contact name and/or an identifier of the first application, not shown in FIG. 1B) to the electronic device 200 through the Bluetooth framework layer 1001A, the Bluetooth management module 1001B, and the Bluetooth module 1001C, so that the electronic device 200 synthesizes and plays second audio based on the contact information. The second audio may be used for broadcasting to the user the contact name and/or the name of the first application, etc.

In a possible implementation, the first application may also trigger the audio framework 1002 to establish a Bluetooth audio channel with the electronic device 200 through the Bluetooth management module 1001B and the Bluetooth module 1001C. The first application may synthesize first audio based on an incoming call prompt tone and/or contact information, and then send the first audio to the electronic device 200 through the Bluetooth module 1001C based on the Bluetooth audio channel. The first audio is used for broadcasting to the user the contact name, and/or the name of the first application, and/or the incoming call prompt tone. For the specific implementation, reference may be made to subsequent embodiments, which will not be repeated here.

The electronic device 200 may, when receiving a first operation acting thereon, send a first command corresponding to the first operation to the Bluetooth module 1001C in the electronic device 100. Then, the Bluetooth module 1001C in the electronic device 100 may send the first command to the Bluetooth management module 1001B. The Bluetooth management module 1001B may determine an identifier of a first function corresponding to the first command (such as an identifier for answering an incoming call, an identifier for rejecting an incoming call, or an identifier for hanging up a call), and then send the identifier of the first function to the Bluetooth framework layer 1001A, so that the Bluetooth framework layer 1001A can send broadcast information corresponding to the identifier of the first function to the first application, thereby allowing the first application to perform the first function. For the specific implementation, reference may be made to subsequent embodiments, which will not be repeated here.

It is to be understood that the Bluetooth audio channel here is a synchronous connection oriented (SCO) link, which is a communication link between the electronic device 100 and the electronic device 200, and supports the sending of time sensitive information, such as voice. Exemplarily, after an SCO link is established between the electronic device 100 and the electronic device 200, the electronic device 100 may send voice audio to the electronic device 200 through the SCO link. The electronic device 200 may acquire the voice audio of the user and return the voice audio to the electronic device 100 based on the SCO link.

It is to be understood that the software architecture of the communication system 10 shown in FIG. 1B is only used for exemplarily describing this application, and does not constitute any limitation on this application.

**Next, in combination with the communication system 10, an interaction mode between modules in a Bluetooth third-party application call management method according to an embodiment of this application will be described.**

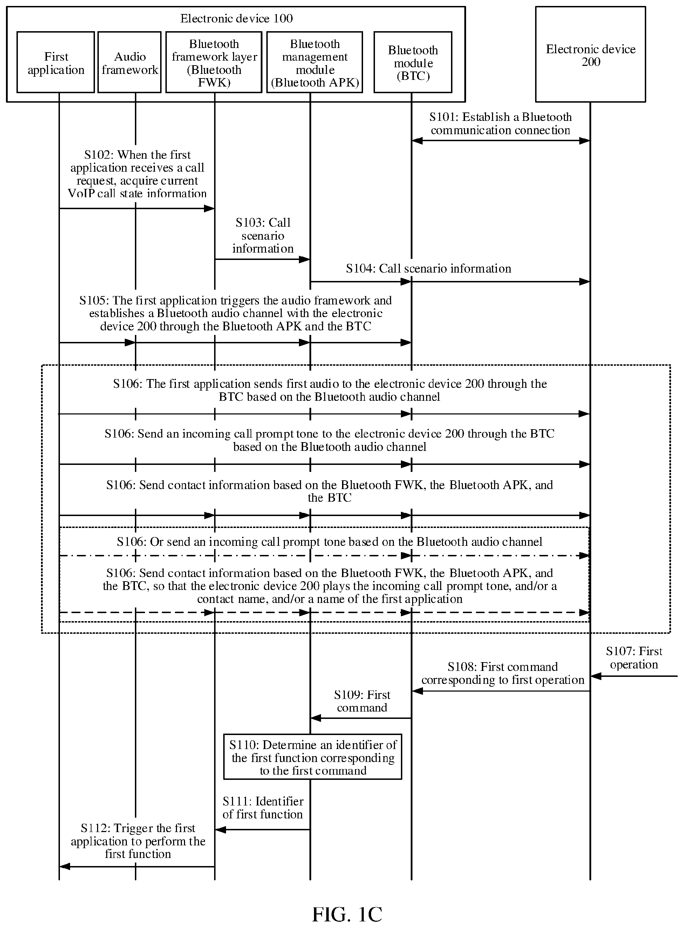

Refer to FIG. 1C. FIG. 1C shows a schematic diagram of interaction between modules in the Bluetooth third-party application call management method.

As shown in FIG. 1C, the interaction between modules may specifically include:
**Stage one: the electronic device 100 indicates a call scenario to the electronic device 200.**

**S101,** the electronic device 100 establishes a Bluetooth communication connection with the electronic device 200 through the Bluetooth module.

Specifically, the electronic device 100 may detect or scan the electronic device 200 by transmitting signals through the Bluetooth module in the electronic device 100, establish a Bluetooth communication connection with the electronic device 200, and transmit data. The Bluetooth module may provide one or more Bluetooth communication solutions including classic Bluetooth (basic rate/enhanced data rate, BR/EDR) or Bluetooth low energy (BLE).

**S102,** when a first application receives a call request, the Bluetooth framework layer (Bluetooth FWK) in the electronic device 100 acquires current VoIP call state information through the first application. The VoIP call state information includes call scenario information and/or contact information, etc.

The call request may be an incoming call request or an outgoing call request. The incoming call request may refer to a request from another user to call the user of the electronic device 100, while the outgoing call request may refer to a request from the user of the electronic device 100 to call another user.

Specifically, the VoIP call state information may include one or more of the following VoIP call contents: call scenario information and/or contact information (such as an identifier of the first application and/or contact name).

The VoIP call state information may be used for the first application to make a VoIP call. The call scenario may be an incoming call scenario, an outgoing call scenario or the like. The call scenario information may be used for indicating whether the current call scenario is an incoming call scenario, an outgoing call scenario or the like. The call scenario information may include an identifier of the call scenario (such as an identifier of the incoming call scenario or an identifier of the outgoing call scenario). The incoming call scenario refers to a scenario where the electronic device 100 receives an incoming call from another user through the first application, while the outgoing call scenario refers to a scenario where the user makes a call through the first application in the electronic device 100. The contact information may be sent from the electronic device 100 to the electronic device 200 based on a Bluetooth command, so as to inform the electronic device 200 of the contact information related to the current call scenario.

**S103,** a Bluetooth framework layer (referred to as Bluetooth FWK) in the electronic device 100 sends the call scenario information to a Bluetooth management module (referred to as Bluetooth APK).

Specifically, the Bluetooth FWK in the electronic device 100 may determine whether the software attribute and hardware capability of the device support the Bluetooth APK to acquire the VoIP call content. For example, taking an Android^{®} system as an example, the Bluetooth FWK in the electronic device 100 may determine whether the software attribute and hardware capability of the device support the Bluetooth APK to acquire the VoIP call content based on a function *voipCallStateChange(Calling).* If the electronic device 100 determines that the software attribute and hardware capability of the device can support the Bluetooth APK to acquire the VoIP call content, the Bluetooth FWK in the electronic device 100 will send the call scenario information to the Bluetooth APK. In some implementations, the electronic device 100 may also determine whether the software attribute and hardware capability support the Bluetooth APK to acquire the VoIP call content by other means.

Optionally, in addition to the call scenario information, the Bluetooth FWK in the electronic device 100 may also send the contact information to the Bluetooth APK, which is not limited in this application.

**S104,** the Bluetooth APK in the electronic device 100 sends the call scenario information to the electronic device 200 through the Bluetooth module (referred to as BTC). The call scenario information may be used for notifying the electronic device 200 of the current call scenario.

Specifically, after the Bluetooth APK in the electronic device 100 receives the call scenario information, the Bluetooth APK may send the call scenario information to the electronic device 200 through the Bluetooth module (BTC) based on the established Bluetooth communication connection, so as to notify the electronic device 200 of the current call scenario.

Exemplarily, taking an Android^{®} system as an example, the BTC may send an AT command to the electronic device 200 through the Bluetooth communication connection to notify the electronic device 200 of the current call scenario. It is to be understood that the call scenario information may be contained in the AT command for sending. The electronic device 100 contains the call scenario information in the AT command through the Bluetooth APK. Similarly, the contact information may be contained in the AT command for sending. The electronic device 100 contains the contact information in the AT command through the Bluetooth APK.

For example, if the AT command is AT+CIEV: (callsetup=1), it indicates that the current call scenario is an incoming call scenario; and if the AT command is AT+CIEV: (callsetup=2), it indicates that the current call scenario is an outgoing call scenario.

**S105,** the first application in the electronic device 100 triggers the audio framework and establishes a Bluetooth audio channel with the electronic device 200 through the Bluetooth APK and the BTC.

Exemplarily, taking an Android^{®} system as an example, the first application in the electronic device 100 may trigger the audio framework based on command codes such as *startBluetoothSco* and *startScoUsingVirtualVoiceCall,* and establish a Bluetooth audio channel with the electronic device 200 through the Bluetooth APK and the BTC. The Bluetooth audio channel may be used for the following cases: (1) the electronic device 100 and the electronic device 200 transmit voice information to each other, so that the user can make a call based on the electronic device 200; and (2) the electronic device 200 receives audio (such as incoming call prompt tone and audio broadcasting contact information) sent by the first application, and plays the audio.

It is to be understood that in other implementations, the electronic device 100 may also establish a Bluetooth audio channel based on other command codes or other methods, which are not limited in this application.

It is to be understood that the implementation time of this step is not limited in this application. That is, the electronic device 100 may perform this step at any time after any one of step S102 to step S104.

**S106,** after the electronic device 100 establishes the Bluetooth audio channel, the electronic device 100 may (1) send first audio to the electronic device 200 based on the Bluetooth audio channel, so that the electronic device 200 plays the incoming call prompt tone, and/or the contact name, and/or the name of the first application; or (2) send the incoming call prompt tone based on the Bluetooth audio channel, so that the electronic device 200 plays the incoming call tone; or (3) send the contact information based on the Bluetooth FWK, the Bluetooth APK, and the BTC, so that the electronic device 200 synthesizes second audio and play the contact name and/or the name of the first application based on the second audio; or (4) send the contact information based on the Bluetooth FWK, the Bluetooth APK, and the BTC, and send the incoming call prompt tone based on the Bluetooth audio channel, so that the electronic device 200 plays the incoming call prompt tone, and/or the contact name, and/or the name of the first application.

In a possible implementation, the first application in the electronic device 100 may synthesize first audio based on the incoming call prompt tone and/or the contact information, and then send the first audio to the electronic device 200 through the BTC based on the Bluetooth audio channel, so that the electronic device 200 can play the first audio to prompt the user about an incoming call contact in the current call scenario. The first audio may be used for broadcasting to the user: the incoming call prompt tone, the contact name and/or the name of the first application, etc.

In another possible implementation, the electronic device 100 may send an incoming call prompt tone to the electronic device 200 through the BTC based on the Bluetooth audio channel, so that the electronic device 200 can play the incoming call prompt tone to prompt the user about a new incoming call.

In another possible implementation, the first application in the electronic device 100 may send the contact information to the electronic device 200 based on the Bluetooth FWK, the Bluetooth APK, and the BTC. After receiving the contact information, the electronic device 200 may synthesize it into second audio and play the second audio to prompt the user about the incoming call contact in the current call scenario. The second audio may be used for broadcasting to the user: the contact name and/or the name of the first application, etc.

In another possible implementation, the electronic device 100 may send an incoming call prompt tone to the electronic device 200 through the Bluetooth audio channel, so that the electronic device 200 can play the incoming call prompt tone to prompt the user about a new incoming call. In addition, the first application in the electronic device 100 may send the contact information to the electronic device 200 based on the Bluetooth FWK, the Bluetooth APK, and the BTC. After receiving the contact information, the electronic device 200 may synthesize it into second audio and play the second audio to prompt the user about the incoming call contact in the current call scenario. The second audio may be used for broadcasting to the user: the contact name and/or the name of the first application, etc.

Exemplarily, the contact name in the contact information may be represented by a number field (e.g., <number>field) in AT+CLCC, and the identifier of the first application in the contact information may be represented by a contact name field (e.g., <alpha> field) in AT+CLCC. When the electronic device 200 receives the number field in AT+CLCC, it may recognize the contact name, and thus broadcast and/or display the contact name; when the electronic device 200 receives the contact name field in AT+CLCC, it may recognize the identifier of the first application, and thus broadcast and/or display the name of the first application.

Further exemplarily, the contact name in the contact information may be represented by a contact name field (e.g., <alpha>field) in AT+CLCC, and the identifier of the first application in the contact information may be represented by a number field (e.g., <number> field) in AT+CLCC.

Further exemplarily, the contact name field (e.g., <alpha> field) in AT+CLCC may be empty, and the contact name and the identifier of the first application in the contact information may be represented by the number field (e.g., <number> field) in AT+CLCC.

Further exemplarily, the number field (e.g., <number> field) in AT+CLCC may be empty, and the contact name and the identifier of the first application in the contact information may be represented by the contact name field (e.g., <alpha> field) in AT+CLCC.

It is to be understood that the contact name and the identifier of the first application may also be represented by other fields in the AT command, which is not limited in this application.

**Stage two: the electronic device 200 instructs the electronic device 100 to perform a designated function.**

**S107,** the electronic device 200 receives a first operation acting on the electronic device 200.

Taking the electronic device 200 being an earphone as an example, the first operation may be an operation of tapping the earphone once, an operation of tapping the earphone twice, an operation of long-pressing the earphone, or the like. Taking the electronic device 200 being a smart watch as an example, the first operation may be an operation of tapping a crown once, tapping the crown twice, long-pressing the crown, or the like. In other implementations, if the electronic device 200 is of another device type (such as a smart bracelet or AR), the first operation may be any other operation, which is not limited in this application.

**S108,** the electronic device 200 sends a first command corresponding to the first operation to the Bluetooth module in the electronic device 100.

Specifically, the electronic device 200 may store a mapping relationship between the first operation and the first command. When the electronic device 200 receives a first operation acting on the electronic device 200, the electronic device 200 may determine a first command corresponding to the first operation based on the above mapping relationship, and send the corresponding first command to the Bluetooth module in the electronic device 100 through the Bluetooth communication connection.

Exemplarily, with the electronic device 200 being an earphone, taking an Android^{®} system as an example, the mapping relationship may be as shown in Table 1:

**Table 1**

| First operation | First command |
|---|---|
| Tapping the earphone once | AT+ATA |
| Long-pressing the earphone | AT+CHUP |
| Tapping the earphone twice | AT+CHUP |
| ... | ... |

As shown in Table 1, when the electronic device 200 determines that the first operation is tapping the earphone once, the electronic device 200 determines that the first command corresponding to the first operation is AT+ATA, and the function represented by the first command is an incoming call answering function. When the electronic device 200 determines that the first operation is a long-pressing the earphone, the electronic device 200 determines that the first command corresponding to the first operation is AT+CHUP, and the function represented by the first command under this operation is an incoming call rejection function. When the electronic device 200 determines that the first operation is tapping the earphone twice, the electronic device 200 determines that the first command corresponding to the first operation is AT+CHUP, and the function represented by the first command under this operation is a call hanging-up function. Then, after the electronic device 200 determines the first command corresponding to the first operation, the electronic device 200 may send the first command to the BTC in the electronic device 100 through the Bluetooth communication connection.

It is to be understood that Table 1 is merely an example for describing this application and does not constitute a limitation on this application.

It is to be understood that in other implementations, the electronic device 200 may also determine the first command corresponding to the first operation by other means, which is not limited in this application.

Exemplarily, with the electronic device 200 being a smart watch, taking an Android^{®} system as an example, the mapping relationship may be as shown in Table 2:

**Table 2**

| First operation | First command |
|---|---|
| Tapping the crown once | AT+ATA |
| Long-pressing the crown | AT+CHUP |
| Tapping the crown twice | AT+CHUP |
| ... | ... |

As shown in Table 2, when the electronic device 200 determines that the first operation is tapping the crown once, the electronic device 200 determines that the first command corresponding to the first operation is AT+ATA, and the function represented by the first command is an incoming call answering function. When the electronic device 200 determines that the first operation is long-pressing the crown, the electronic device 200 determines that the first command corresponding to the first operation is AT+CHUP, and the function represented by the first command under this operation is an incoming call rejection function. When the electronic device 200 determines that the first operation is tapping the crown twice, the electronic device 200 determines that the first command corresponding to the first operation is AT+CHUP, and the function represented by the first command under this operation is a call hanging-up function. Then, after the electronic device 200 determines the first command corresponding to the first operation, the electronic device 200 may send the first command to the BTC in the electronic device 100 through the Bluetooth communication connection.

It is to be understood that Table 2 is merely an example for describing this application and does not constitute a limitation on this application.

**S109,** the Bluetooth module in the electronic device 100 sends the first command to the Bluetooth APK.

**S110,** the Bluetooth APK in the electronic device 100 determines an identifier of the first function corresponding to the first command.

Exemplarily, with the electronic device 200 being an earphone or a smart watch, an Android^{®} system is taken as an example. The Bluetooth APK in the electronic device 100 acquires the first command sent by the BTC. If the first command is AT+ATA, the Bluetooth APK may determine that the identifier of the first function corresponding to the first command is an identifier for answering an incoming call. If the first command is AT+CHUP, the Bluetooth APK may determine that the identifier of the first function corresponding to the first command is an identifier for hanging up a call/rejecting an incoming call.

Answering an incoming call may refer to that the electronic device 200 can receive voice information based on the Bluetooth audio channel and play it, and the electronic device 200 can send the voice information to the electronic device 100. Hanging up a call/rejecting an incoming call may refer to that the electronic device 100 disconnects the Bluetooth audio channel, so that the electronic device 200 no longer receives the voice information and plays it, and the electronic device 200 cannot send the voice information to the electronic device 100 based on the Bluetooth audio channel.

It is to be understood that in other implementations, in addition to answering an incoming call, hanging up a call, and rejecting an incoming call, the first function exemplarily described above may also be any other function, which is not limited in this application.

**S111,** the Bluetooth APK in the electronic device 100 sends the identifier of the first function to the Bluetooth FWK.

**S112,** the Bluetooth FWK in the electronic device 100 triggers the first application to perform the first function.

Exemplarily, taking an Android^{®} system as an example, the Bluetooth APK in the electronic device 100 may send the identifier of the first function (such as the identifier for answering an incoming call, the identifier for hanging up a call/rejecting an incoming call) to the Bluetooth FWK, and then the Bluetooth FWK may send broadcast information corresponding to the identifier of the first function to the first application. After receiving the broadcast information corresponding to the identifier of the first function, the first application may perform the corresponding first function (such as an incoming call answering function, an incoming call rejection function, or a call hanging-up function).

For example, if the identifier of the first function is the identifier for answering an incoming call, the Bluetooth FWK may send broadcast information corresponding to the identifier for answering an incoming call to the first application, so that the first application can perform an incoming call answering function. That is, the electronic device 200 can receive and play the voice information sent by the first application on the electronic device 100 based on the Bluetooth audio channel, and the electronic device 200 can also send the voice information to the first application in the electronic device 100.

If the identifier of the first function is the identifier for hanging up a call/rejecting an incoming call, the Bluetooth FWK may send broadcast information corresponding to the identifier for hanging up a call/rejecting an incoming call to the first application, so that the first application can perform a call hanging-up call/incoming call rejection function. That is, the first application in the electronic device 100 disconnects the Bluetooth audio channel, so that the electronic device 200 no longer receives the voice information and plays it, and the electronic device 200 cannot send the voice information to the first application in the electronic device 100 based on the Bluetooth audio channel.

It is to be understood that in the above process, the call scenario information may be sent together with the contact information, and the call scenario information may also be sent separately from the contact information, which is not limited in this application.

**Below, a specific flowchart of a Bluetooth third-party application call management method according to an embodiment of this application will be described.**

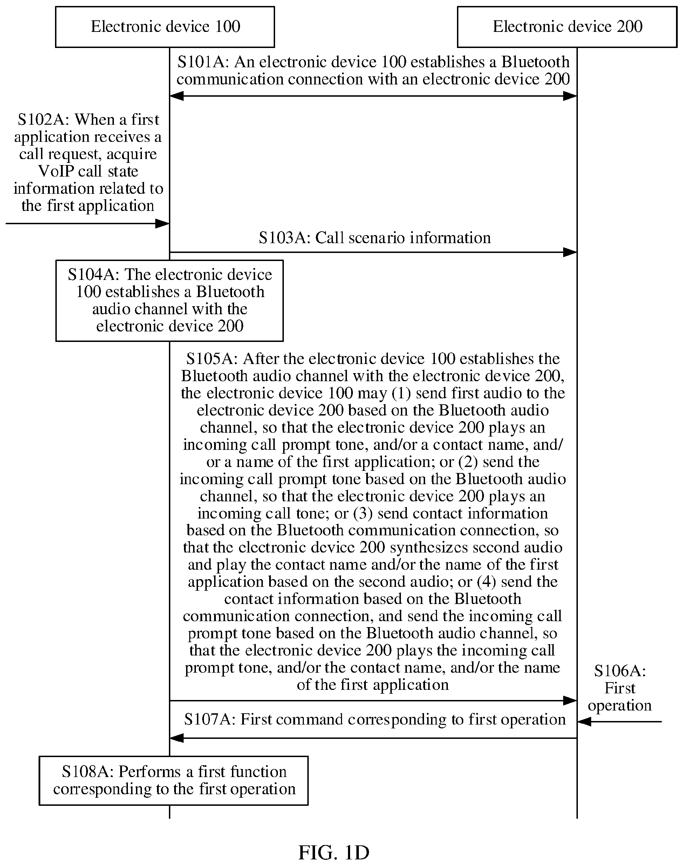

Refer to FIG. 1D. FIG. 1D exemplarily shows a specific flowchart of a Bluetooth third-party application call management method according to an embodiment of this application.

As shown in FIG. 1D, the method may specifically include the following steps:
**S101A,** an electronic device 100 establishes a Bluetooth communication connection with an electronic device 200.

Specifically, for the description of this step, reference may be made to step S101 described above.

**S102A,** when a first application in the electronic device 100 receives a call request, the electronic device 100 acquires a VoIP call state information related to the first application. The VoIP call state information includes call scenario information and/or contact information, etc.

Specifically, for the description of this process, reference may be made to step S102 described above.

**S103A,** the electronic device 100 sends call scenario information to the electronic device 200. The call scenario information may be used for notifying the electronic device 200 of the current call scenario.

Specifically, for the description of this step, reference may be made to step S103 to step S104 described above.

**S104A,** the electronic device 100 establishes a Bluetooth audio channel with the electronic device 200.

Specifically, for the description of this step, reference may be made to step S105 described above.

It is to be understood that the implementation time of this step is not limited in this application. That is, the electronic device 100 may perform this step at any time after any one of step S102A and step S103A.

**S105A,** after the electronic device 100 establishes the Bluetooth audio channel with the electronic device 200, the electronic device 100 may (1) send first audio to the electronic device 200 based on the Bluetooth audio channel, so that the electronic device 200 plays the incoming call prompt tone, and/or the contact name, and/or the name of the first application; or (2) send the incoming call prompt tone based on the Bluetooth audio channel, so that the electronic device 200 plays the incoming call tone; or (3) send contact information based on the Bluetooth communication connection, so that the electronic device 200 synthesizes second audio and play the contact name and/or the name of the first application based on the second audio; or (4) send the contact information based on the Bluetooth communication connection, and send the incoming call prompt tone based on the Bluetooth audio channel, so that the electronic device 200 plays the incoming call prompt tone, and/or the contact name, and/or the name of the first application.

Specifically, for the description of this step, reference may be made to step S106 described above.

**S106A,** the electronic device 200 receives a first operation acting on the electronic device 200.

Specifically, for the description of this step, reference may be made to step S107 described above.

**S107A,** the electronic device 200 sends a first command corresponding to the first operation to the electronic device 100.

Specifically, for the description of this step, reference may be made to step S108 described above.

**S108A,** the electronic device 100 performs a first function corresponding to the first operation.

Specifically, the first command indicates a first function, and the electronic device 100 performs the first function through the first application based on the first command. Since the first operation corresponds to the first command and the first command indicates the first function, the first function also corresponds to the first operation. For the description of this step, reference may be made to step S109 to step S112 described above.

**Below, a communication system 20 according to an embodiment of this application will be described.**

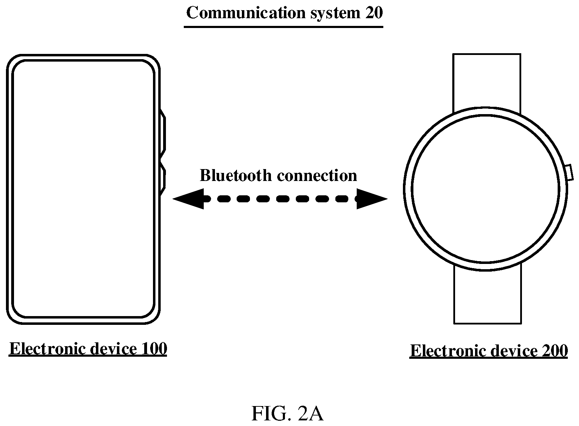

Refer to FIG. 2A. FIG. 2A shows a schematic diagram of an architecture of a communication system 20 according to an embodiment of this application.

As shown in FIG. 2A, description is made here by taking an electronic device 100 being a mobile phone and an electronic device 200 being a smart watch as example. The electronic device 100 and the electronic device 200 may establish a Bluetooth connection, and transmit data information to each other through the Bluetooth connection. For example, the electronic device 100 may send call scenario information (such as incoming call scenario information or outgoing call scenario information) to electronic device 200 through the Bluetooth connection. The electronic device 200 may display a call management control (such as an incoming call answering control, a call hanging-up control, or an incoming call rejection control) based on the call scenario information. When the electronic device 200 receives a touch operation (i.e., the first operation) acting on the call management control, the electronic device 200 may send a first command corresponding to an identifier of the call management control, such as an incoming call answering command, an incoming call rejection command, or a call hanging-up command, to the electronic device 100 through the Bluetooth connection, so that the electronic device 100 can perform a first function corresponding to the command (such as answering am incoming call, rejecting an incoming call, or hanging up a call).

In some embodiments, the electronic device 100 may be an electronic device such as a mobile phone, a tablet computer, a PC, an ultra-mobile personal computer (UMPC), a netbook, or a personal digital assistant (PDA). The specific type of the electronic device 100 is not limited in any manner in this application. The electronic device 200 may be an electronic device such as a smart watch, a smart bracelet, a wearable device, an augmented reality (AR)/a virtual reality (VR) device, or the like. It is to be understood that the electronic device 200 is an electronic device with a display screen. The specific type of the electronic device 200 is not limited in any manner in this application.

It is to be understood that the exemplary structure of the communication system shown in this embodiment of this application does not constitute a specific limitation on the communication system 20. In some other embodiments of this application, the communication system 20 may include more or less electronic devices than the electronic devices shown in the figure, or may include electronic devices whose type is different from the type of the electronic devices shown in the figure. For example, the communication system 20 may further include multiple electronic devices 200 that establish communication connections with the electronic device 100, such as smart watches, or multiple different types of electronic devices, such as displays, tablet computers, and PCs that have a communication function. This is not limited in this application.

**Below, a software architecture of a communication system 20 according to an embodiment of this application will be described.**

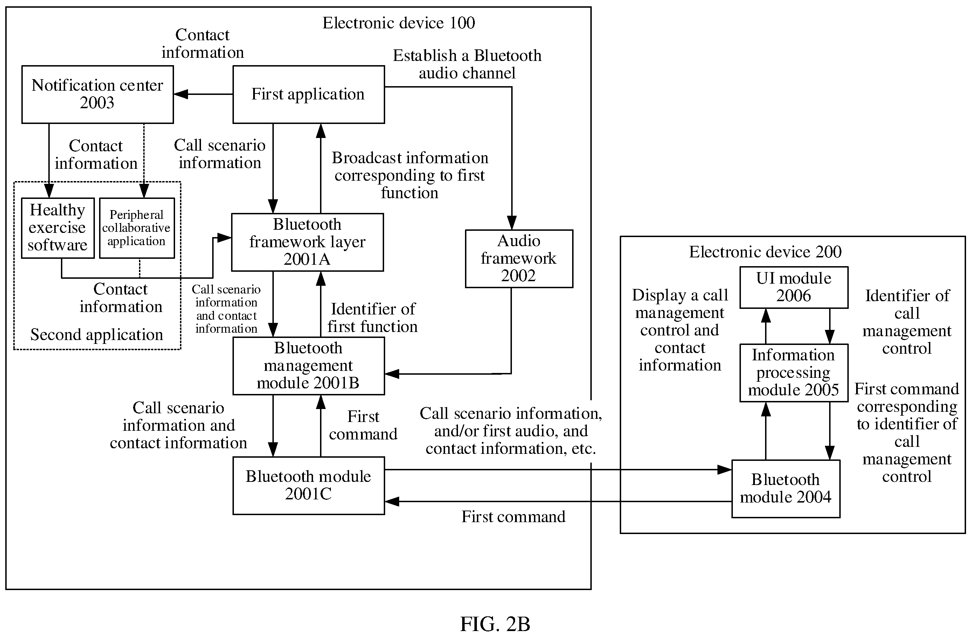

Refer to FIG. 2B. FIG. 2B shows a schematic diagram of a software architecture of a communication system 20 according to an embodiment of this application.

As shown in FIG. 2B, the communication system 20 includes an electronic device 100 and an electronic device 200. The electronic device 100 includes a first application, a Bluetooth framework layer (i.e., Bluetooth FWK) 2001A, a Bluetooth management module (i.e., Bluetooth APK) 2001B, a Bluetooth module (i.e., BTC) 2001C, an audio framework 2002, and a notification center 2003. The electronic device 200 may include a Bluetooth module 2004, an information processing module 2005, and a UI module 2006. The information processing module 2005 may be a micro controller unit (MCU).

The first application may send call scenario information to the Bluetooth module 2004 in the electronic device 200 through the Bluetooth framework layer 2001A, the Bluetooth management module 2001B, and the Bluetooth module 2001C, so as to notify the electronic device 200 of a current call scenario.

In a possible implementation, the first application may also send contact information (such as a contact name, and/or a contact avatar, and/or an identifier of the first application) to the Bluetooth module 2004 in the electronic device 200 through the notification center 2003, a second application, the Bluetooth framework layer 2001A, the Bluetooth management module 2001B, and the Bluetooth module 2001C in the electronic device 100, so that the electronic device 200 displays the contact information through the UI module 2006, and/or the electronic device 200 synthesizes second audio based on the contact information and play it. The second audio may be used for broadcasting to the user the contact name and/or a name of the first application, etc.

In a possible implementation, the first application may also trigger the audio framework 2002 to establish a Bluetooth audio channel with the electronic device 200 through the Bluetooth management module 2001B and the Bluetooth module 2001C. The first application synthesizes first audio based on an incoming call prompt tone and/or contact information, and then sends the first audio to the electronic device 200 based on the Bluetooth audio channel. The first audio may be used for broadcasting to the user the incoming call prompt tone, and/or the contact name, and/or the name of the first application, etc. The second application may be healthy exercise software (such as an exercise health application), or a peripheral collaborative application (such as a Synergy module). Specifically, for the operations performed by the first application, reference may be made to the description in the embodiment described above, which will not be repeated here.

In another possible implementation, the first application may also send contact information to the Bluetooth module 2004 in the electronic device 200 through the Bluetooth framework layer 2001A, the Bluetooth management module 2001B, and the Bluetooth module 2001C.

The call scenario information and/or the contact information may be sent to the UI module 2006 through the Bluetooth module 2004 and the information processing module 2005 in the electronic device 200. The UI module 2006 in the electronic device 200 may display a corresponding call management control (such as an incoming call answering control, an incoming call rejection control, or a call hanging-up control) and/or the contact information (such as a contact name, and/or a contact avatar, and/or a name of the first application) based on the call scenario information and/or the contact information. When the electronic device 200 receives a touch operation on the call management control, the UI module 2006 may send an identifier of the call management control to the information processing module 2005, and the information processing module 2005 determines a first command corresponding to the identifier of the call management control and sends the first command to the Bluetooth module 2004 in the electronic device 200. Then, the Bluetooth module 2004 in the electronic device 200 may send the first command to the Bluetooth module 2001C in the electronic device 100. Then, the Bluetooth module 2001C in the electronic device 100 may send the first command to the Bluetooth management module 2001B. The Bluetooth management module 2001B may determine an identifier of a first function corresponding to the first command (such as an identifier for answering an incoming call, an identifier for rejecting an incoming call, or an identifier for hanging up a call), and then send the identifier of the first function to the Bluetooth framework layer 2001A, so that the Bluetooth framework layer 2001A can send broadcast information corresponding to the identifier of the first function to the first application. For a specific implementation, reference may be made to the description above, which will not be repeated here.

It is to be understood that the software architecture of the communication system 20 shown in FIG. 2B is only used for exemplarily describing this application, and does not constitute any limitation on this application.

**Next, in combination with the communication system 20, a specific implementation of another Bluetooth third-party application call management method according to an embodiment of this application will be described.**

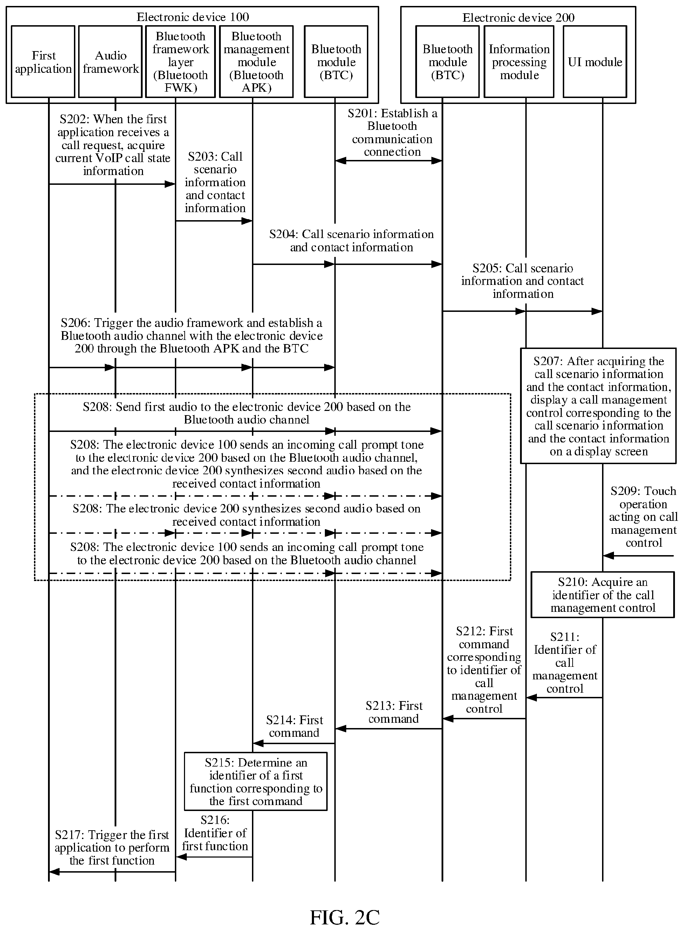

Refer to FIG. 2C. FIG. 2C shows a schematic diagram of interaction between modules in the Bluetooth third-party application call management method.

As shown in FIG. 2C, the method may specifically include the following steps:
**Stage one: the electronic device 100 indicates a call scenario to the electronic device 200.**

**S201,** an electronic device 100 and electronic device 200 establish a Bluetooth communication connection through respective Bluetooth modules.

Specifically, for the description of this step, reference may be made to the description of step S101.

**S202,** when the first application receives a call request, a Bluetooth framework layer (Bluetooth FWK) in the electronic device 100 acquires current VoIP call state information through the first application. The VoIP call state information includes call scenario information and contact information, etc.

Specifically, for the description of this step, reference may be made to the description of step S102.

**S203,** the Bluetooth framework layer (referred to as Bluetooth FWK) in the electronic device 100 sends the call scenario information and the contact information to the Bluetooth management module (referred to as Bluetooth APK).

Specifically, for the description of this step, reference may be made to step S103.

It is to be understood that the first application in the electronic device 100 may send the contact information to the Bluetooth FWK through the second application, and then the Bluetooth FWK sends the contact information to the Bluetooth APK. The contact information may include: a contact name, and/or a contact avatar, and/or an identifier of the first application, etc. The contact name may include an emoticon. The second application may be healthy exercise software (such as an exercise health application), or a peripheral collaborative application (such as a Synergy module). In this way, the second application can better manage the contact information, so that the electronic device 200 can acquire and display a richer contact display effect. For example, it can display the emoticon in the contact name.

In a possible implementation, the first application may not send the contact information to the Bluetooth FWK through the second application, but directly send the contact information to the Bluetooth APK through the Bluetooth FWK.

**S204,** the Bluetooth APK in the electronic device 100 sends the call scenario information and the contact information to the Bluetooth module in the electronic device 200 through the Bluetooth module (referred to as BTC).

Specifically, after the Bluetooth APK in the electronic device 100 receives the call scenario information and the contact information, the Bluetooth APK may send the call scenario information and the contact information to the electronic device 200 through the Bluetooth module (BTC), so as to notify the electronic device 200 of the current call scenario and contact.

Exemplarily, taking an Android^{®} system as an example, the BTC may send an AT command to the electronic device 200 to notify the electronic device 200 of the current call scenario. It is to be understood that the call scenario information may be contained in the AT command for sending. the electronic device 100 contains the call scenario information in the AT command through the Bluetooth APK. Similarly, the contact information may be contained in the AT command for sending. The electronic device 100 contains the contact information in the AT command through the Bluetooth APK.

For example, if the AT command is AT+CIEV: (callsetup=1), it indicates that the current call scenario is an incoming call scenario; if the AT command is AT+CIEV: (callsetup=2), it indicates that the current call scenario is an outgoing call scenario.

Exemplarily, the contact name in the contact information may be represented by a number field (e.g., <number>field) in AT+CLCC, and the identifier of the first application in the contact information may be represented by a contact name field (e.g., <alpha> field) in AT+CLCC. When the electronic device 200 receives the number field in AT+CLCC, it may recognize the contact name, and thus broadcast and/or display the contact name; when the electronic device 200 receives the contact name field in AT+CLCC, it may recognize the identifier of the first application, and thus broadcast and/or display the name of the first application.

Further exemplarily, the contact name in the contact information may be represented by a contact name field (e.g., <alpha>field) in AT+CLCC, and the identifier of the first application in the contact information may be represented by a number field (e.g., <number> field) in AT+CLCC.

Further exemplarily, the contact name field (e.g., <alpha> field) in AT+CLCC may be empty, and the contact name and the identifier of the first application in the contact information may be represented by the number field (e.g., <number> field) in AT+CLCC.

Further exemplarily, the number field (e.g., <number> field) in AT+CLCC may be empty, and the contact name and the identifier of the first application in the contact information may be represented by the contact name field (e.g., <alpha> field) in AT+CLCC.

It is to be understood that the contact name and the identifier of the first application may also be represented by other fields in the AT command, which is not limited in this application.

**S205,** the Bluetooth module in the electronic device 200 sends the received call scenario information and contact information to the UI module through the information processing module.

**S206,** the first application in the electronic device 100 triggers the audio framework and establishes a Bluetooth audio channel with the electronic device 200 through the Bluetooth APK and the BTC.

Specifically, for the description of this step, reference may be made to the description of step S105.

It is to be understood that the implementation time of step S206 is not limited in this application. That is, the electronic device 100 may perform this step at any time after any one of step S202 to step S205, and step S207.

**S207,** after acquiring the call scenario information and the contact information (such as the contact name, and/or the contact avatar, and/or the identifier of the first application), the UI module in the electronic device 200 may display a call management control corresponding to the call scenario information and the contact information (such as the contact name, and/or the contact avatar, and/or the name of the first application) on the display screen.

It is to be understood that the contact name described in this embodiment of this application refers to a name of a contact displayed in the first application. For example, if the first application is WeChat, the contact name is a name displayed in WeChat, i.e., a WeChat name.

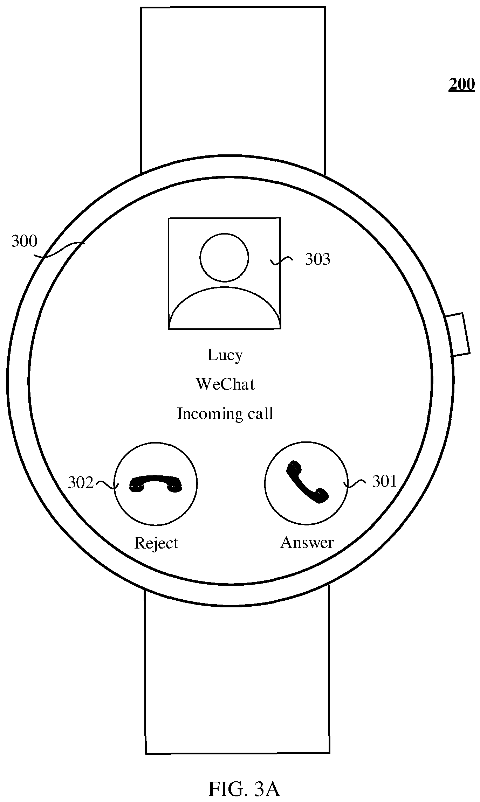

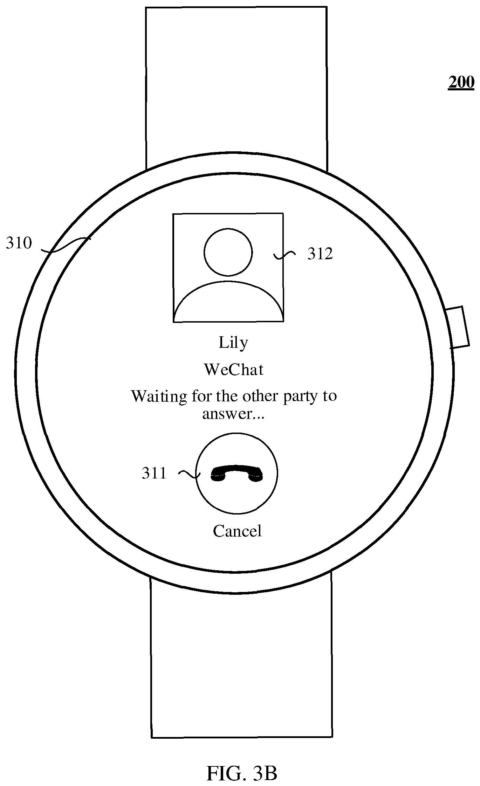

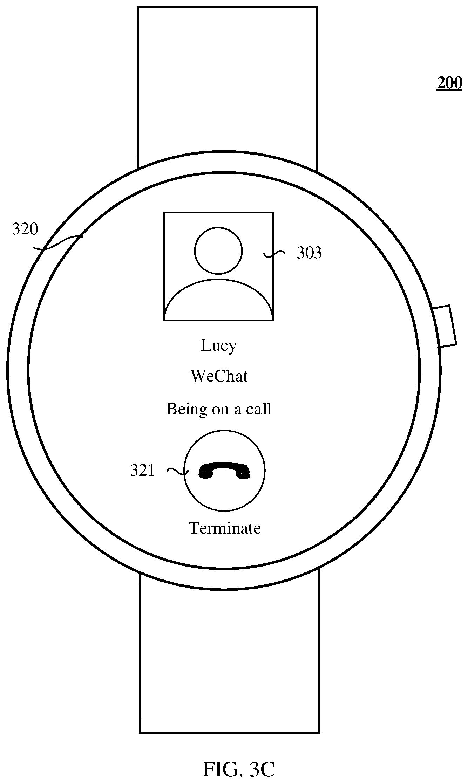

Exemplarily, taking the electronic device 200 being a smart watch as an example:
(1) As shown in FIG. 3A, if the call scenario information is incoming call scenario information, the electronic device 200 may display a call interface 300. The call interface 300 may include an "answer" control 301 (i.e., incoming call answering control) and a "reject" control 302 (i.e., an incoming call rejection control). The "answer" control 301 and the "reject" control 302 may be used for receiving a touch operation acting thereon, so that the electronic device 200 can send a corresponding command to the electronic device 100. The call interface 300 may also display text information "Incoming call" to prompt the user that the current call scenario is an incoming call scenario. The call interface 300 may also display the contact information, including a contact avatar 303, a contact name "Lucy", and the name of the first application "WeChat".
(2) As shown in FIG. 3B, if the call scenario information is outgoing call scenario information, the electronic device 200 may display a call interface 310. The user interface 300 may include a "cancel" control 311. This control may be used for receiving a touch operation acting thereon, so that the electronic device 200 can send a corresponding command to the electronic device 100. The call interface 310 may also display text information "Waiting for the other party to answer" to prompt the user that the current call scenario is an outgoing call scenario. The call interface 310 may also display the contact information, including a contact avatar 312, a contact name "Lily", and the name of the first application "WeChat".
(3) As shown in FIG. 3C, if the electronic device 200 receives a touch operation acting on the incoming call answering control, the electronic device 200 may display a call interface 320. The user interface 320 may include a "hang up" control 321 (i.e., a call hanging-up control). This control may be used for receiving a touch operation acting thereon, so that the electronic device 200 can send a corresponding command to the electronic device 100. The call interface 320 may also display text information "Being on a call" to prompt the user that the current call scenario is a being-on-a-call scenario. The call interface 320 may also display the contact information, including a contact avatar 303, a contact name "Lucy", and the name of the first application "WeChat".

It is to be understood that the "answer" control 301 (incoming call answering control), the "reject" control 302 (incoming call rejection control), the "cancel" control 311 (incoming call cancellation control), and "hang up" control 321 (call hanging-up control) may be referred to as call management controls.

It is to be understood that the user interface is only used for exemplarily describing this application, instead of limiting this application.

**S208,** after the electronic device 100 establishes the Bluetooth audio channel with the electronic device 200, (1) the electronic device 100 may send first audio to the electronic device 200 based on the Bluetooth audio channel, so that the electronic device 200 plays the incoming call prompt tone, and/or the contact name, and/or the name of the first application; or (2) the electronic device 100 sends an incoming call prompt tone to the electronic device 200 based on the Bluetooth audio channel, so that the electronic device 200 synthesizes second audio based on the received contact information, and plays the incoming call prompt tone and/or the contact name, and/or the name of the first application based on the second audio and the incoming call prompt tone; or (3) the electronic device 200 synthesizes second audio based on the received contact information, so that the electronic device 200 plays the contact name and/or the name of the first application based on the second audio (not shown in FIG. 2C); or (4) the electronic device 100 sends an incoming call prompt tone to the electronic device 200 based on the Bluetooth audio channel, so that the electronic device 200 plays incoming call prompt tone.

In a possible implementation, the first application in the electronic device 100 may synthesize first audio based on the incoming call prompt tone and/or the contact information (such as the contact name and/or the identifier of the first application, etc.), and then send the first audio to the electronic device 200 through the BTC in the electronic device 100 based on the Bluetooth audio channel. After receiving the first audio, the electronic device 200 may play the first audio to prompt the user about the incoming call contact in the current call scenario. The first audio may be used for broadcasting to the user: the incoming call prompt tone, the contact name and/or the name of the first application, etc.

In another possible implementation, the electronic device 100 may send an incoming call prompt tone to the electronic device 200 through the Bluetooth audio channel, so that the electronic device 200 can play the incoming call prompt tone to prompt the user about a new incoming call. In another possible implementation, the first application in the electronic device 100 has sent the contact information (such as the contact name and/or the identifier of the first application) to the electronic device 200 through the second application, the Bluetooth FWK, and Bluetooth APK, and the BTC; or, the first application in the electronic device 200 has sent the contact information to the electronic device 200 through the Bluetooth FWK, the Bluetooth APK, and the Bluetooth module. After receiving the contact information, the electronic device 200 may synthesize it into second audio and play the second audio to prompt the user about the incoming call contact in the current call scenario. The second audio may be used for broadcasting to the user: the contact name and/or the name of the first application, etc.

In another possible implementation, the electronic device 100 may send an incoming call prompt tone to the electronic device 200 through the Bluetooth audio channel, so that the electronic device 200 can play the incoming call prompt tone to prompt the user about a new incoming call. In the above step, the first application in the electronic device 100 has sent the contact information (such as the contact name and/or the identifier of the first application) to the electronic device 200 through the second application, the Bluetooth FWK, and Bluetooth APK, and the BTC; or, the first application in the electronic device 200 has sent the contact information to the electronic device 200 through the Bluetooth FWK, the Bluetooth APK, and the Bluetooth module. After receiving the contact information, the electronic device 200 may synthesize it into second audio and play the second audio to prompt the user about the incoming call contact in the current call scenario. The second audio may be used for broadcasting to the user: the contact name and/or the name of the first application, etc.

The second application may be healthy exercise software (such as an exercise health application), or a peripheral collaborative application (such as a Synergy module).

**Stage two: the electronic device 200 instructs the electronic device 100 to perform a designated function.**

**S209,** the UI module in the electronic device 200 receives a touch operation acting on a call management control.

Exemplarily, the touch operation (i.e., the first operation) acting on the call management control may be a touch operation acting on the incoming call answering control, a touch operation acting on the incoming call rejection control, a touch operation acting on the incoming call cancellation control, or a touch operation acting on the call hanging-up control.

**S210,** the UI module in the electronic device 200 acquires an identifier of the call management control.

**S211,** the UI module in the electronic device 200 may send the identifier of the call management control to the information processing module.

**S212,** the information processing module in the electronic device 200 determines a first command corresponding to the identifier of the call management control and send the first command to the Bluetooth module in the electronic device 200.

Specifically, the electronic device 200 may store a mapping relationship between the identifier of the call management control and the first command. When the information processing module in the electronic device 200 receives the identifier of the call management control, it may determine a first command corresponding to the identifier of the call management control and send the first command to the Bluetooth module in the electronic device 200.

It is to be understood that since the first operation corresponds to the identifier of the call management control, the first command corresponding to the identifier of the call management control may also be regarded as the first command corresponding to the first operation.

Exemplarily, with the electronic device 200 being a smart watch, taking an Android^{®} system as an example, the mapping relationship may be as shown in Table 3:

**Table 3**

| Identifier | Call management control | First command |
|---|---|---|
| 1 | "Answer" control 301 | AT+ATA |
| 2 | "Reject" control 302 | AT+CHUP |
| 3 | "Cancel" control 311 | AT+CHUP |
| 4 | "Hang up" control 321 | AT+CHUP |
| ... | | |

As shown in Table 3, the identifier of the "answer" control 301 is 1, the first command corresponding to the identifier is AT+ATA, and the function represented by the first command is an incoming call answering function (which may be referred to incoming call answering for short); the identifier of the "reject" control 302 is 2, the first command corresponding to the identifier is AT+CHUP, and the function represented by the first command is an incoming call rejection function (which may be referred to incoming call rejection for short); the identifier of the "cancel" control 311 is 3, the first command corresponding to the identifier is AT+CHUP, and the function represented by the first command is a call cancellation function (which may be referred to call cancellation for short); the identifier of the "hang up" control 321 is 4, the first command corresponding to the identifier is AT+CHUP, and the function represented by the first command is a call hanging-up function (which may be referred to call hanging-up for short).

It is to be understood that Table 3 is merely an example for describing this application and does not constitute a limitation on this application.

It is to be understood that in other implementations, the Bluetooth module in the electronic device 200 may also determine the first command corresponding to the identifier of the call management control by other means, which is not limited in this application.

**S213,** the Bluetooth module in the electronic device 200 sends the first command corresponding to the identifier of the call management control to the Bluetooth module in the electronic device 100.

**S214,** the Bluetooth module in the electronic device 100 sends the first command to the Bluetooth APK in the electronic device 100.

**S215,** the Bluetooth APK in the electronic device 100 determines an identifier of the first function corresponding to the first command.

Exemplarily, with the electronic device 200 being a smart watch, an Android^{®} system is taken as an example. The Bluetooth APK in the electronic device 100 acquires the first command sent by the BTC. If the first command is AT+ATA, the Bluetooth APK may determine that the identifier of the first function corresponding to the first command is an identifier for answering an incoming call. If the first command is AT+CHUP, the Bluetooth APK may determine that the identifier of the first function corresponding to the first command is an identifier for hanging up a call/rejecting an incoming call/canceling a call.

Answering an incoming call may refer to that the electronic device 200 can receive voice information based on the Bluetooth audio channel and play it, and the electronic device 200 can send the voice information to the electronic device 100. Hanging up a call/rejecting an incoming call/canceling a call may refer to that the electronic device 100 disconnects the Bluetooth audio channel, so that the electronic device 200 no longer receives the voice information and plays it, and the electronic device 200 cannot send the voice information to the electronic device 100 based on the Bluetooth audio channel.

It is to be understood that in other implementations, in addition to answering an incoming call, hanging up a call, rejecting an incoming call, and canceling a call, the first function exemplarily described above may also be any other function, which is not limited in this application.

**S216,** the Bluetooth APK in the electronic device 100 sends the identifier of the first function to the Bluetooth FWK.

**S217,** the electronic device 100 triggers the first application to perform the first function through the Bluetooth FWK.

Specifically, for the description of this step, reference may be made to the description of step S112.

It is to be understood that when the first function is to cancel a call, for the corresponding broadcast information sent by the Bluetooth APK to the first application, reference may be made to as hanging up a call/rejecting an incoming call.

It is to be understood that in the above process, the call scenario information may be sent together with the contact information, and the call scenario information may also be sent separately from the contact information, which is not limited in this application.

**Below, a specific flowchart of another Bluetooth third-party application call management method according to an embodiment of this application will be described.**

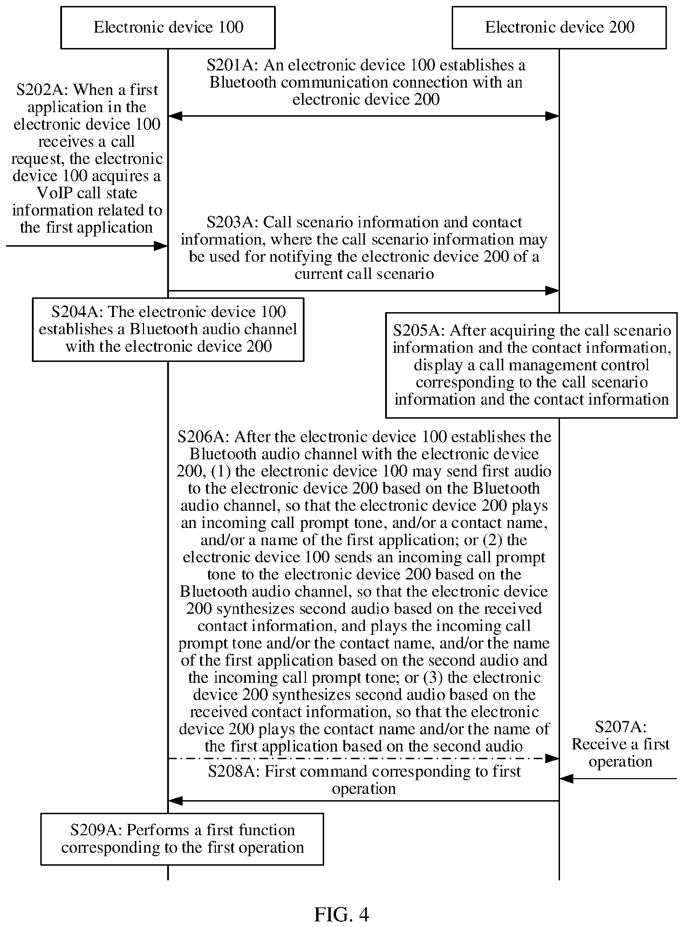

Refer to FIG. 4. FIG. 4 exemplarily shows a specific flowchart of a Bluetooth third-party application call management method according to an embodiment of this application.

As shown in FIG. 4, the method may include the following steps:

**S201A,** an electronic device 100 establishes a Bluetooth communication connection with an electronic device 200.

Specifically, for the description of this step, reference may be made to step S201 described above.

**S202A,** when a first application in the electronic device 100 receives a call request, the electronic device 100 acquires a VoIP call state information related to the first application. The VoIP call state information includes call scenario information and contact information, etc.

Specifically, for the description of this step, reference may be made to step S202 described above.

**S203A,** the electronic device 100 sends call scenario information and contact information to the electronic device 200. The call scenario information may be used for notifying the electronic device 200 of the current call scenario.

Specifically, for the description of this step, reference may be made to step S203 to step S205 described above.

**S204A,** the electronic device 100 establishes a Bluetooth audio channel with the electronic device 200.

Specifically, for the description of this step, reference may be made to step S206 described above.

It is to be understood that the implementation time of step S204A is not limited in this application. That is, the electronic device 100 may perform this step at any time after any one of step S202A to step S203A, and step S205A.

**S205A,** after acquiring the call scenario information and the contact information (such as the contact name, and/or the contact avatar, and/or the identifier of the first application), the electronic device 200 may display a call management control corresponding to the call scenario information and the contact information (such as the contact name, and/or the contact avatar, and/or the name of the first application).

Specifically, for the description of this step, reference may be made to step S207 described above.

**S206A,** after the electronic device 100 establishes the Bluetooth audio channel with the electronic device 200, (1) the electronic device 100 may send first audio to the electronic device 200 based on the Bluetooth audio channel, so that the electronic device 200 plays the incoming call prompt tone, and/or the contact name, and/or the name of the first application; or (2) the electronic device 100 sends an incoming call prompt tone to the electronic device 200 based on the Bluetooth audio channel, so that the electronic device 200 synthesizes second audio based on the received contact information, and plays the incoming call prompt tone and/or the contact name, and/or the name of the first application based on the second audio and the incoming call prompt tone; or (3) the electronic device 200 synthesizes second audio based on the received contact information, so that the electronic device 200 plays the contact name and/or the name of the first application based on the second audio; or (4) the electronic device 100 sends an incoming call prompt tone to the electronic device 200 based on the Bluetooth audio channel, so that the electronic device 200 plays incoming call prompt tone.

Specifically, for the description of this step, reference may be made to step S208 described above.

**S207A,** the electronic device 200 receives a first operation.

Specifically, the first operation is the touch operation acting on the call management control. For the description of this step, reference may be made to step S209 described above.

**S208A,** the electronic device 200 sends a first command corresponding to the first operation to the electronic device 100.

Specifically, for the description of this step, reference may be made to step S210 to step S213 described above.

**S209A,** the electronic device 100 performs a first function corresponding to the first operation.

Specifically, the first command indicates a first function, and the electronic device 100 performs the first function through the first application based on the first command. Since the first operation corresponds to the first command and the first command indicates the first function, the first function also corresponds to the first operation. For the description of this step, reference may be made to step S214 to step S217 described above.

It is to be understood that the electronic device 100 may be referred to as a first electronic device, and the electronic device 200 may be referred to as a second electronic device; the VoIP call state information may be referred to as call state information; the call scenario information is used for indicating an incoming call scenario or an outgoing call scenario;
the contact name is a name of a contact displayed in the first application; the content of the first audio includes the incoming call prompt tone, the contact name, and/or the name of the first application, so that the second electronic device plays the first audio to the user;
the first audio synthesized only based on the contact information may be referred to as third audio, and the content of the third audio includes the contact name and/or the name of the first application, so that the second electronic device plays the third audio to the user; the first command may be an incoming call answering command, an incoming call rejection command, or a call hanging-up command; or, the first command may be an incoming call answering command, an incoming call rejection command, a call cancellation command, or a call hanging-up command, and the first command may be an AT command; AT+ATA is used for representing an incoming call answering function, and AT+CHUP is used for representing an incoming call rejection function, a call hanging-up function, or a call cancellation function; or, AT+CHUP is used for representing an incoming call rejection function, a call hanging-up function, or a call cancellation function;
the first operation is a touch operation acting on an incoming call answering control, a touch operation acting on an incoming call rejection control, a touch operation acting on an incoming call cancellation control, or a touch operation acting on a call hanging-up control; or, the first operation is an operation of tapping an earphone once, an operation of long-pressing the earphone, or an operation of tapping the earphone twice;
the first function is an incoming call answering function, an incoming call rejection function, or a call hanging-up function; and or, the first function is an incoming call answering function, an incoming call rejection function, a call cancellation function, or a call hanging-up function.

The call management control may include an incoming call answering control, and/or an incoming call cancellation control, and/or an incoming call rejection control, and/or a call hanging-up control.

**Below, a hardware structure of an electronic device 100 according to an embodiment of this application will be described.**

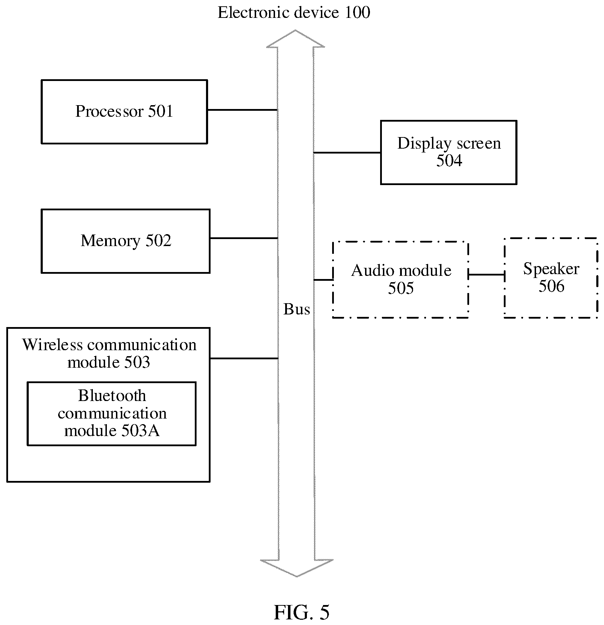

Refer to FIG. 5. FIG. 5 exemplarily shows a schematic diagram of a hardware structure of an electronic device 100 according to an embodiment of this application.

As shown in FIG. 5, the electronic device 100 may include a processor 501, a memory 502, a wireless communication module 503, a display screen 504, etc. The foregoing modules may be connected through a bus or in another manner. In this embodiment of this application, connection through a bus is used as an example.

It is to be understood that the structure illustrated in this embodiment of the present embodiment does not constitute a specific limitation on the electronic device 100. In some other embodiments of this application, the electronic device 100 may further include more or fewer components than those shown in the figure, some components may be combined, some components may be split, or different component arrangements may be adopted. The components shown in the figure may be implemented by hardware, software, or a combination of software and hardware.

The processor 501 may include one or more processing units. For example, the processor 501 may include an application processor (AP), a modem processor, a graphics processing unit (GPU), an image signal processor (ISP), a controller, a video codec, a digital signal processor (DSP), a baseband processor, a neural-network processing unit (NPU), and/or the like. Different processing units may be independent devices, or may be integrated into one or more processors. The controller may generate an operation control signal according to an instruction operation code and a time-sequence signal, and control operations of acquiring and executing instructions.

A memory may also be arranged in the processor 501, and is configured to store instructions and data. In some embodiments, the memory in the processor 501 is a cache memory. The memory may store instructions or data that are just used or used cyclically by the processor 501. If the processor 501 needs to use the instructions or the data again, the processor may directly invoke the instructions or the data from the memory. This avoids repeated access, and reduces the waiting time of the processor 501, so that the system efficiency is improved.

In some embodiments, the processor 501 may include one or more interfaces. The interface may be an inter-integrated Circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, a USB interface, and/or the like.

The memory 502 is coupled to the processor 501, and is configured to store various software programs and/or multiple groups of instructions. During specific implementation, the memory 502 may include a volatile memory, such as a random access memory (RAM); it may also include a non-volatile memory, such as ROM, flash memory, Hard Disk Drive (HDD), or Solid State Drive (SSD); the memory 502 may also include a combination of the above-mentioned types of memories. The memory 502 may store some program codes, to enable the processor 501 to invoke the program codes stored in the memory 502, to implement the implementation method in the electronic device 100 according to this embodiment of this application. The memory 502 may store an operating system, for example, an embedded operating system such as uCOS, VxWorks, or RTLinux.

The wireless communication module 503 may include a Bluetooth communication module 503A. The electronic device 100 and the electronic device 200 may transmit data information to each other based on one or more wireless communication technologies in the Bluetooth communication module 503A. The Bluetooth communication module 503A may provide one or more Bluetooth communication solutions including classic Bluetooth (basic rate/enhanced data rate, BR/EDR) or Bluetooth low energy (BLE). The wireless communication module 503 may receive an electromagnetic wave through an antenna (not shown in FIG. 5), perform frequency modulation and filtering processing on an electromagnetic wave signal, and send a processed signal to the processor 501. The wireless communication module 503 may further receive a signal to be sent from the processor 501, perform frequency modulation and amplification thereon, and convert it to an electromagnetic wave by the antenna for radiation.

In some embodiments, the wireless communication module 503 may further provide wireless communication solutions applied to the electronic device 100, including global navigation satellite system (GNSS), frequency modulation (FM), near field communication (NFC), and infrared (IR).

The display screen 504 may be configured to display an image, a video, or the like. The display screen 504 may include a display panel. The display panel may use a liquid crystal display (LCD), an organic light-emitting diode (OLED), an active-matrix organic light emitting diode (AMOLED), a flexible light-emitting diode (FLED), a Miniled, a MicroLed, a Micro-oLed, a quantum dot light emitting diode (QLED), or the like. In some embodiments, the electronic device 100 may include one or N display screens 504, where N is a positive integer greater than 1.

Optionally, the electronic device 100 may further include an audio module 505, which is configured to convert digital audio information into an analog audio signal for output, and may be further configured to convert an analog audio input into a digital audio signal. The audio module 505 may be further configured to encode and decode the audio signal. In some embodiments, the audio module 505 may further be disposed in the processor 501, or some functional modules of the audio module 505 are disposed in the processor 501.

Optionally, the electronic device 100 may further include a speaker 506, which may also be referred to as a "loudspeaker" and configured to convert an audio electrical signal into a sound signal. The electronic device 100 may listen to music or answer a hands-free call through the speaker 506.

Optionally, the electronic device 100 may further include a mobile communication module (not shown in FIG. 5). The mobile communication module may provide a solution applied to the electronic device 100 for wireless communication such as 2G/3G/4G/5G.

Optionally, the electronic device 100 may further include a touch sensor (not shown in FIG. 5). The touch sensor may also be referred to as a "touch device". The touch sensor may be arranged on the display screen 504. The touch sensor and the display screen 504 form a touchscreen, which is also referred to as a "touch screen". The touch sensor may be configured to detect a touch operation acting on or near the touch sensor.

It is to be understood that in some embodiments, before the electronic device 100 performs the Bluetooth third-party application call management method provided in this application, the electronic device 100 may set whether it can perform the Bluetooth third-party application call management method, for example, by setting *Settings.Global.getInt(mContext.getContentResolver(), "bluetooth_voip_state",* 0) ==1, so that the electronic device 100 can perform the Bluetooth third-party application call management method.

In some embodiments, when the electronic device 100 establishes the Bluetooth audio channel with the electronic device 200, the electronic device 100 may set *isScoAvailableOffCall* and a Muses device synchronously adapts to HFP protocols, so that the audio framework can be routed to the electronic device 200.

In some embodiments, the electronic device 100 may determine whether the electronic device 100 supports an inbandring interface (METADATA_HW_INBANDRING). For an inbandring device, the audio framework may stop the incoming call prompt tone set by the electronic device 200 and play the audio sent by the electronic device 100.

**Below, a hardware structure of an electronic device 200 according to an embodiment of this application will be described.**

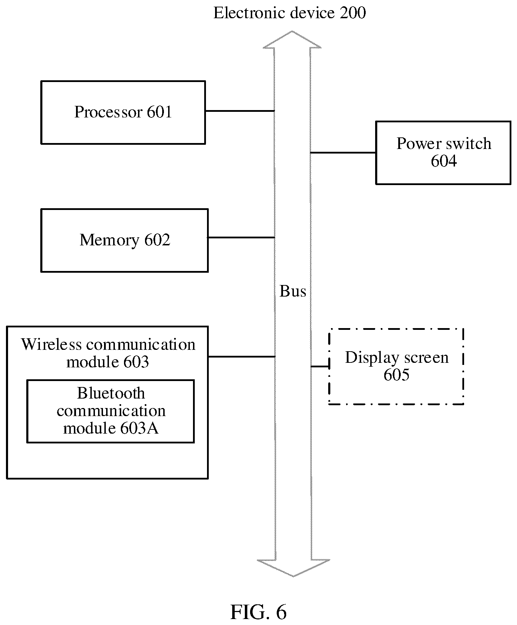

Refer to FIG. 6. FIG. 6 exemplarily shows a schematic diagram of a hardware structure of an electronic device 200 according to an embodiment of this application.

As shown in FIG. 6, for example, the electronic device 200 may include a processor 601, a memory 602, a wireless communication module 603, a power switch 604, a display screen 605, and the like. The foregoing modules may be connected through a bus or in another manner. In this embodiment of this application, connection through a bus is used as an example.

The processor 601 may be configured to read and execute computer-readable instructions. During specific implementation, the processor 601 may mainly include a controller, an arithmetic unit, and a register. The controller is mainly responsible for decoding an instruction and transmitting a control signal for an operation corresponding to the instruction. The arithmetic unit is mainly responsible for storing a register operant and an intermediate operation result that are temporarily stored during instruction execution. During specific implementation, a hardware architecture of the processor 601 may be an Application-Specific Integrated Circuit (ASIC) architecture, an MIPS architecture, an ARM architecture, an NP architecture, or the like.

In some embodiments, the processor 601 may be configured to parse data information received by the wireless communication module 603. The processor 601 may respond based on the data information and perform a corresponding operation. The processor 601 may be further configured to generate a signal, such as a Bluetooth signal, sent by the wireless communication module 603 to the outside.

The memory 602 is coupled to the processor 601, and is configured to store various software programs and/or multiple groups of instructions. During specific implementation, the memory 602 may include a high-speed random access memory, and may also include a non-volatile memory such as one or more disk storage devices, flash devices, or other non-volatile solid-state storage devices. The memory 602 may further store a communication program. The communication program may be used for communicating with the electronic device 100 or another electronic device.

The wireless communication module 603 may include a Bluetooth communication module 603A or the like. The electronic device 200 may receive or transmit a wireless signal through one or more in the Bluetooth communication module 603A to establish a wireless communication connection with the electronic device 100. The electronic device 200 may transmit data information to and from the electronic device 100 through the wireless communication connection mentioned above. The Bluetooth communication module 603A may provide one or more Bluetooth communication solutions including classic Bluetooth (basic rate/enhanced data rate, BR/EDR) or Bluetooth low energy (BLE).

The power switch 604 may be configured to control a power supply to supply power to the electronic device 200.

Optionally, the electronic device 200 may include a display screen 605. The display screen 605 may be used for displaying an image, a video, a control, text information, or the like. The display screen 605 may include a display panel. The display panel may use a liquid crystal display (LCD), an organic light-emitting diode (OLED), an active-matrix organic light emitting diode (AMOLED), a flexible light-emitting diode (FLED), a Miniled, a MicroLed, a Micro-oLed, a quantum dot light emitting diode ( QLED), or the like. In some embodiments, the electronic device 200 may include one or N display screens 605, where N is a positive integer greater than 1.

Optionally, the electronic device 200 may include a touch sensor (not shown in FIG. 6), and the touch sensor may also be referred to as a "touch device." The touch sensor may be arranged in the display screen 605. The touch sensor and the display screen 605 form a touchscreen, which may also be referred to as a "touch control screen". The touch sensor may be configured to detect a touch operation acting on or near the touch sensor.

Optionally, the electronic device 200 may include one or more physical buttons. The one or more physical buttons may receive an input operation (for example, pressing the physical button) by a user on the button. In response to the input operation, the electronic device 200 may perform a corresponding operation of a control displayed on the display screen corresponding to the physical button.

It is to be understood that the electronic device 200 shown in FIG. 6 is only an implementation of this embodiment of this application, and does not constitute a specific limitation on the electronic device 200. For example, the electronic device 200 may be a smart watch, and the electronic device 200 may further include a watch band and a watch face. The watch face may include a display screen 605 for displaying an image, a video, a control, text information, or the like. The watch band may be configured to fasten the electronic device 200 to a limb of a human body for ease of wearing. During actual application, the electronic device 200 may further include more or fewer components than those shown in the figure, which is not limited here.

As used in the above embodiments, according to the context, the term "when" may be interpreted as "if", "after", "in response to determining", or "in response to detecting". Similarly, based on the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the above embodiments may be implemented by software, hardware, firmware, or any combination thereof. When software is used for implementing the embodiments, all or some of the embodiments may be implemented in the form of a computer program product. The computer program product includes one or more computer instructions. When the computer program instructions are loaded and executed on a computer, all or some of the processes or functions according to the embodiments of this application are generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, coaxial cable, optical fiber, or digital subscriber line) or wireless (for example, infrared, radio, or microwave) manner. The computer-readable storage medium may be any usable medium accessible by the computer, or a data storage device such as a server or data center integrated with one or more usable media. The usable medium may be a magnetic medium (such as a soft disk, a hard disk, or a magnetic tape), an optical medium (such as a DVD), a semiconductor medium (such as a solid state disk), etc.

Those skilled in the art may understand that all or some of the processes in the methods in the embodiments may be implemented through a computer program instructing related hardware. The program may be stored in the computer-readable storage medium. When the program is executed, the processes in the method embodiments may be performed. The storage medium includes various mediums that can store a program code, such as ROMs, RAMs, magnetic disks, or optical disks.

## Claims

1. A Bluetooth third-party application call management method applied to a first electronic device, the method comprising:
establishing, by the first electronic device, a Bluetooth communication connection with a second electronic device;
receiving, by a first application in the first electronic device, a call request; and
sending, by the first electronic device, call scenario information to the second electronic device,
wherein the first application is a third-party application that supports instant messaging, and the call scenario information is used for indicating an incoming call scenario or an outgoing call scenario.

2. The method according to claim 1, further comprising:
receiving, by the first electronic device, a first command sent by the second electronic device, wherein the first command indicates a first function; and
performing, by the first electronic device, the first function through the first application based on the first command, wherein the first function is an incoming call answering function, an incoming call rejection function, or a call hanging-up function.

3. The method according to claim 1, wherein after receiving, by a first application in the first electronic device, a call request, the method further comprises:
sending, by the first electronic device, contact information to the second electronic device, wherein the contact information comprises a contact name and/or an identifier of the first application, wherein the contact name is a name of a contact displayed in the first application.

4. The method according to claim 1 or 3, wherein after sending, by the first electronic device, call scenario information to the second electronic device, the method further comprises:
establishing, by the first electronic device, a Bluetooth audio channel with the second electronic device;
synthesizing, by the first electronic device, first audio based on an incoming call prompt tone and the acquired contact information; and
sending, by the first electronic device, the first audio to the second electronic device based on the Bluetooth audio channel, wherein the content of the first audio comprises the incoming call prompt tone, the contact name, and/or a name of the first application, so that the second electronic device plays the first audio to a user.

5. The method according to claim 1, wherein after sending, by the first electronic device, call scenario information to the second electronic device, the method further comprises:
establishing, by the first electronic device, a Bluetooth audio channel with the second electronic device; and
sending, by the first electronic device, an incoming call prompt tone to the second electronic device based on the Bluetooth audio channel, wherein the incoming call prompt tone is used by the second electronic device for prompting a user about a new incoming call.

6. The method according to claim 1, wherein after sending, by the first electronic device, call scenario information to the second electronic device, the method further comprises:
establishing, by the first electronic device, a Bluetooth audio channel with the second electronic device;
synthesizing, by the first electronic device, third audio based on the acquired contact information; and
sending, by the first electronic device, the third audio to the second electronic device based on the Bluetooth audio channel, wherein the content of the third audio comprises a contact name and/or a name of the first application, so that the second electronic device plays the third audio to a user.

7. The method according to claim 1, wherein the call scenario information comprises an identifier of a call scenario.

8. The method according to claim 1, wherein the call scenario information is sent within an AT command.

9. The method according to claim 8, wherein AT+CIEV: (callsetup=1) is used for indicating that a current call scenario is an incoming call scenario, and AT+CIEV: (callsetup=2) is used for indicating that the current call scenario is an outgoing call scenario.

10. The method according to claim 2, wherein the first command is an AT command.

11. The method according to claim 10, wherein AT+ATA is used for representing the incoming call answering function, and AT+CHUP is used for representing the incoming call rejection function or the call hanging-up function.

12. The method according to claim 3, wherein the contact information is sent within an AT command.

13. The method according to claim 12, wherein the AT command comprises an AT+CLCC command, a number field in the AT+CLCC command represents the contact name, and a contact name field in the AT+CLCC command represents the identifier of the first application;
or, the contact name field in the AT+CLCC command represents the contact name, and the number field in the AT+CLCC command represents the identifier of the first application;
or, the number field in the AT+CLCC command represents the contact name and the identifier of the first application;
or, the contact name field in the AT+CLCC command represents the contact name and the identifier of the first application.

14. A Bluetooth third-party application call management method applied to a second electronic device, the method comprising:
establishing, by the second electronic device, a Bluetooth communication connection with a first electronic device;
receiving, by the second electronic device, call scenario information sent by the first electronic device; and
playing, by the second electronic device, a contact name and/or a name of a first application,
wherein the first application is a third-party application that supports instant messaging, the call scenario information is used for indicating an incoming call scenario or an outgoing call scenario, and the contact name is a name of a contact displayed in the first application.

15. The method according to claim 14, wherein after receiving, by the second electronic device, call scenario information sent by the first electronic device, the method further comprises:
receiving, by the second electronic device, a first operation; and
sending, by the second electronic device, a first command corresponding to the first operation to the first electronic device, wherein the first command indicates a first function, and the first function is an incoming call answering function, an incoming call rejection function, or a call hanging-up function.

16. The method according to claim 14, wherein after establishing, by the second electronic device, a Bluetooth communication connection with a first electronic device, the method further comprises:
receiving, by the second electronic device, contact information sent by the first electronic device, wherein the contact information comprises a contact name and/or an identifier of the first application.

17. The method according to claim 14, wherein playing, by the second electronic device, a contact name and/or a name of a first application specifically comprises:
receiving, by the second electronic device, first audio sent by the first electronic device; and
playing, by the second electronic device, an incoming call prompt tone, the contact name and/or the name of the first application based on the first audio.

18. The method according to claim 14, wherein playing, by the second electronic device, a contact name and/or a name of a first application specifically comprises:
synthesizing, by the second electronic device, second audio based on acquired contact information; and
playing, by the second electronic device, the contact name and/or the name of the first application based on the second audio.

19. The method according to claim 18, wherein before synthesizing, by the second electronic device, second audio based on acquired contact information, the method further comprises:
receiving, by the second electronic device, an incoming call prompt tone sent by the first electronic device; and
before playing, by the second electronic device, the contact name and/or the name of the first application based on the second audio, the method further comprises:
playing, by the second electronic device, the incoming call prompt tone.

20. The method according to claim 15, wherein the first operation is an operation of tapping an earphone once, an operation of long-pressing the earphone, or an operation of tapping the earphone twice.

21. The method according to claim 15, wherein the first command is an incoming call answering command, an incoming call rejection command, or a call hanging-up command.

22. The method according to claim 15 or 21, wherein the first command is an AT command.

23. The method according to claim 22, wherein AT+ATA is used for representing the incoming call answering function, and AT+CHUP is used for representing the incoming call rejection function, the call hanging-up function, or a call cancellation function.

24. A Bluetooth third-party application call management method applied to a second electronic device, the method comprising:
establishing, by the second electronic device, a Bluetooth communication connection with a first electronic device;
receiving, by the second electronic device, call scenario information and contact information sent by the first electronic device; and
displaying, by the second electronic device, a call management control corresponding to the call scenario information, a contact name, and/or a name of a first application,
wherein the first application is a third-party application that supports instant messaging, the call scenario information is used for indicating an incoming call scenario or an outgoing call scenario, and the contact information comprises the contact name and/or an identifier of the first application, wherein the contact name is a name of a contact displayed in the first application.

25. The method according to claim 24, wherein after receiving, by the second electronic device, call scenario information and contact information sent by the first electronic device, the method further comprises:
receiving, by the second electronic device, a first operation; and
sending, by the second electronic device, a first command corresponding to the first operation to the first electronic device, wherein the first command indicates a first function, and the first function is an incoming call answering function, an incoming call rejection function, a call cancellation function, or a call hanging-up function.

26. The method according to claim 25, wherein the call management control comprises an incoming call answering control, and/or an incoming call cancellation control, and/or an incoming call rejection control, and/or a call hanging-up control.

27. The method according to claim 26, wherein the first operation is a touch operation acting on the incoming call answering control, a touch operation acting on the incoming call rejection control, a touch operation acting on the incoming call cancellation control, or a touch operation acting on the call hanging-up control.

28. The method according to claim 25 or 27, wherein the first command is an incoming call answering command, an incoming call rejection command, a call cancellation command, or a call hanging-up command.

29. The method according to claim 25, wherein the first command is an AT command.

30. The method according to claim 29, wherein AT+ATA is used for representing the incoming call answering function, and AT+CHUP is used for representing the incoming call rejection function, the call hanging-up function, or the call cancellation function.

31. The method according to claim 24, further comprising:
receiving, by the second electronic device, first audio sent by the first electronic device; and
playing, by the second electronic device, an incoming call prompt tone, the contact name and/or the name of the first application based on the first audio.

32. The method according to claim 24, further comprising:
synthesizing, by the second electronic device, second audio based on the contact information; and
playing, by the second electronic device, the contact name and/or the name of the first application based on the second audio.

33. The method according to claim 24, further comprising:
receiving, by the second electronic device, an incoming call prompt tone sent by the first electronic device; and
playing, by the second electronic device, the incoming call prompt tone.

34. The method according to claim 33, wherein before playing, by the second electronic device, the incoming call prompt tone, the method further comprises:
synthesizing, by the second electronic device, second audio based on the contact information; and
after playing, by the second electronic device, the incoming call prompt tone, the method further comprises:
playing, by the second electronic device, the contact name and/or the name of the first application based on the second audio.

35. A Bluetooth third-party application call management method applied to a communication system comprising a first electronic device and a second electronic device, the method comprising:
establishing, by the first electronic device, a Bluetooth communication connection with the second electronic device;
receiving, by a first application in the first electronic device, a call request;
sending, by the first electronic device, call scenario information to the second electronic device; and
playing, by the second electronic device, an incoming call prompt tone, and/or a contact name, and/or a name of the first application,
wherein the first application is a third-party application that supports instant messaging, and the call scenario information is used for indicating an incoming call scenario or an outgoing call scenario.

36. The method according to claim 35, further comprising:
receiving, by the second electronic device, a first operation;
sending, by the second electronic device, a first command corresponding to the first operation to the first electronic device, wherein the first command indicates a first function, and the first function is an incoming call answering function, an incoming call rejection function, or a call hanging-up function; and
performing, by the first electronic device, the first function through the first application based on the first command.

37. The method according to claim 35, wherein after receiving, by a first application in the first electronic device, a call request, the method further comprises:
sending, by the first electronic device, contact information to the second electronic device,
wherein the contact information comprises the contact name and/or an identifier of the first application, wherein the contact name is a name of a contact displayed in the first application.

38. The method according to claim 35, wherein after sending, by the first electronic device, call scenario information to the second electronic device, the method further comprises:
establishing, by the first electronic device, a Bluetooth audio channel with the second electronic device;
synthesizing, by the first electronic device, first audio based on the incoming call prompt tone and acquired contact information;
sending, by the first electronic device, the first audio to the second electronic device based on the Bluetooth audio channel; and
playing, by the second electronic device, the incoming call prompt tone, and/or the contact name, and/or the name of the first application, specifically comprising:
playing, by the second electronic device, the incoming call prompt tone, the contact name and/or the name of the first application based on the first audio.

39. The method according to claim 35, wherein playing, by the second electronic device, the incoming call prompt tone, and/or the contact name, and the name of the first application specifically comprises:
synthesizing, by the second electronic device, second audio based on acquired contact information; and
playing, by the second electronic device, the contact name and/or the name of the first application based on the second audio.

40. The method according to claim 35, wherein after sending, by the first electronic device, call scenario information to the second electronic device, the method further comprises:
establishing, by the first electronic device, a Bluetooth audio channel with the second electronic device;
synthesizing, by the first electronic device, third audio based on the acquired contact information; and
playing, by the second electronic device, the incoming call prompt tone, and/or the contact name, and the name of the first application, specifically comprising:
playing, by the second electronic device, the contact name and/or the name of the first application based on the third audio.

41. The method according to claim 35, wherein the call scenario information is sent within an AT command.

42. The method according to claim 41, wherein AT+CIEV: (callsetup=1) is used for indicating that a current call scenario is an incoming call scenario, and AT+CIEV: (callsetup=2) is used for indicating that the current call scenario is an outgoing call scenario.

43. The method according to claim 36, wherein the first operation is an operation of tapping an earphone once, an operation of long-pressing the earphone, or an operation of tapping the earphone twice; the first command is an AT command.

44. The method according to claim 43, wherein AT+ATA is used for representing the incoming call answering function, and AT+CHUP is used for representing the incoming call rejection function or the call hanging-up function.

45. The method according to claim 37, wherein the contact information is sent within an AT command.

46. The method according to claim 45, wherein the AT command comprises an AT+CLCC command, a number field in the AT+CLCC command represents the contact name, and a contact name field in the AT+CLCC command represents the identifier of the first application;
or, the contact name field in the AT+CLCC command represents the contact name, and the number field in the AT+CLCC command represents the identifier of the first application;
or, the number field in the AT+CLCC command represents the contact name and the identifier of the first application;
or, the contact name field in the AT+CLCC command represents the contact name and the identifier of the first application.

47. A Bluetooth third-party application call management method applied to a communication system comprising a first electronic device and a second electronic device, the method comprising:
establishing, by the first electronic device, a Bluetooth communication connection with the second electronic device;
receiving, by a first application in the first electronic device, a call request;
sending, by the first electronic device, call scenario information and contact information to the second electronic device; and
displaying, by the second electronic device, a call management control corresponding to the call scenario information, a contact name, and/or a name of the first application,
wherein the first application is a third-party application that supports instant messaging, the call scenario information is used for indicating an incoming call scenario or an outgoing call scenario, the contact information comprises the contact name and/or an identifier of the first application, and the contact name is a name of a contact displayed in the first application.

48. The method according to claim 47, wherein after displaying, by the second electronic device, a call management control corresponding to the call scenario information, a contact name, and/or a name of the first application, the method further comprises:
receiving, by the second electronic device, a first operation;
sending, by the second electronic device, a first command corresponding to the first operation to the first electronic device, wherein the first command indicates a first function, and the first function is an incoming call answering function, an incoming call rejection function, a call cancellation function, or a call hanging-up function; and
performing, by the first electronic device, the first function through the first application based on the first command.

49. The method according to claim 47, wherein the call management control comprises an incoming call answering control, and/or an incoming call cancellation control, and/or an incoming call rejection control, and/or a call hanging-up control.

50. The method according to claim 49, wherein the first operation is a touch operation acting on the incoming call answering control, a touch operation acting on the incoming call rejection control, a touch operation acting on the incoming call cancellation control, or a touch operation acting on the call hanging-up control.

51. The method according to claim 48, wherein the first command is an incoming call answering command, an incoming call rejection command, a call cancellation command, or a call hanging-up command.

52. The method according to claim 48, wherein the first command is an AT command.

53. The method according to claim 52, wherein AT+ATA is used for representing the incoming call answering function, and AT+CHUP is used for representing the incoming call rejection function, the call hanging-up function, or the call cancellation function.

54. The method according to claim 47, further comprising:
further receiving, by the second electronic device, first audio sent by the first electronic device; and
playing, by the second electronic device, an incoming call prompt tone, the contact name and/or the name of the first application based on the first audio.

55. The method according to claim 47, further comprising:
synthesizing, by the second electronic device, second audio based on the contact information; and playing, by the second electronic device, the contact name and/or the name of the first application based on the second audio.

56. The method according to claim 47, further comprising:
receiving, by the second electronic device, an incoming call prompt tone sent by the first electronic device; and
playing, by the second electronic device, the incoming call prompt tone.

57. A computer-readable storage medium, comprising computer instructions, which, when running on an electronic device, cause the electronic device to perform the method according to any one of claims 1 to 34.

58. A chip system, comprising a processing circuit and an interface circuit, wherein the interface circuit is configured to receive code instructions and transmit the code instructions to the processing circuit, and the processing circuit is configured to run the code instructions to perform the method according to any one of claims 1 to 34.

59. A communication method applied to a first electronic device, the method comprising:
when a first application running on the first electronic device receives a call request, acquiring, by the first electronic device, current voice over IP (VoIP) call state information through the first application, wherein the call request comprises an incoming call request or an outgoing call request, the VoIP call state information comprises call scenario information, and the call scenario information is used for indicating an incoming call scenario or an outgoing call scenario;
sending, by the first electronic device, the call scenario information to the second electronic device, wherein the second electronic device has established a Bluetooth communication connection with the first electronic device;
receiving, by the first electronic device, a first command from the second electronic device, wherein the first command instructs the first electronic device to perform a first function, and the first function is an incoming call answering function, an incoming call rejection function, or a call hanging-up function; and
performing, by the first electronic device, the first function through the first application based on the first command, wherein the first application is a third-party application that supports instant messaging.

60. The method according to claim 59, wherein the VoIP call state information further comprises contact information, the contact information comprises a contact name and/or an identifier of the first application, wherein the contact name is a name of a contact displayed in the first application;
after the first application running on the first electronic device receives the call request, the method further comprises:
sending, by the first electronic device, the contact information to the second electronic device.

61. The method according to claim 60, wherein before receiving, by the first electronic device, a first command from the second electronic device, the method further comprises:
establishing, by the first electronic device, a Bluetooth audio channel with the second electronic device;
synthesizing, by the first electronic device, first audio based on the incoming call prompt tone and the acquired contact information; and
sending, by the first electronic device, the first audio to the second electronic device based on the Bluetooth audio channel, wherein the content of the first audio comprises the incoming call prompt tone, a contact name, and/or a name of the first application, so that the second electronic device plays the first audio to a user.

62. The method according to claim 59, wherein before receiving, by the first electronic device, a first command from the second electronic device, the method further comprises:
establishing, by the first electronic device, a Bluetooth audio channel with the second electronic device; and
sending, by the first electronic device, an incoming call prompt tone to the second electronic device based on the Bluetooth audio channel, wherein the incoming call prompt tone is used by the second electronic device for prompting a user about a new incoming call.

63. The method according to claim 62, wherein the VoIP call state information further comprises contact information, the contact information comprises a contact name and/or an identifier of the first application, wherein the contact name is a name of a contact displayed in the first application;
before receiving, by the first electronic device, a first command from the second electronic device, the method further comprises:
establishing, by the first electronic device, a Bluetooth audio channel with the second electronic device;
synthesizing, by the first electronic device, third audio based on the acquired contact information; and
sending, by the first electronic device, the third audio to the second electronic device based on the Bluetooth audio channel, wherein the content of the third audio comprises a contact name and/or a name of the first application, so that the second electronic device plays the third audio to a user.

64. The method according to claim 59, wherein the call scenario information comprises an identifier of a call scenario.

65. The method according to claim 59, wherein the call scenario information is sent within an AT command.

66. The method according to claim 65, wherein the AT command is AT+CIEV: (callsetup=1) used for indicating that a current call scenario is an incoming call scenario, and the AT command is AT+CIEV: (callsetup=2) used for indicating that the current call scenario is an outgoing call scenario.

67. The method according to claim 59, wherein the first command is an AT command.

68. The method according to claim 67, wherein the AT command comprises AT+ATA and A+CHUP; the AT+ATA is used for representing the incoming call answering function, and the AT+CHUP is used for representing the incoming call rejection function or the call hanging-up function.

69. The method according to claim 61, wherein the contact information is sent within an AT command.

70. The method according to claim 69, wherein the AT command comprises an AT+CLCC command, a number field in the AT+CLCC command represents the contact name, and a contact name field in the AT+CLCC command represents the identifier of the first application;
or, the contact name field in the AT+CLCC command represents the contact name, and the number field in the AT+CLCC command represents the identifier of the first application;
or, the number field in the AT+CLCC command represents the contact name and the identifier of the first application;
or, the contact name field in the AT+CLCC command represents the contact name and the identifier of the first application.
